# EUROPEAN PATENT APPLICATION

(11) **EP 4 510 518 A1**
(43) Date of publication of application: **19.02.2025**
(21) Application number: 23799736.6
(22) Date of filing: 04.05.2023
(51) Int. Cl.: H04L 41/0663, H04L 43/0811, H04L 41/40, H04L 41/0668, H04L 67/1034, G06F 11/30, G06F 11/14, G06F 9/455

(54) **METHOD AND APPARATUS FOR CONTROLLING CONTAINER APPLICATION IN CONTAINER-BASED MULTI-CLUSTER ENVIRONMENT**

(30) Priority: 06.05.2022 KR 20220055931; 21.10.2022 KR 20220136582
(71) Applicant: Samsung Electronics Co., Ltd., Suwon-si, Gyeonggi-do 16677 (KR)
(72) Inventor: RAMASAMY, Boopathi, Suwon-si Gyeonggi-do 16677 (KR); KIM, Weonsu, Suwon-si Gyeonggi-do 16677 (KR); KIM, Jun, Suwon-si Gyeonggi-do 16677 (KR); NA, Yeonjoo, Suwon-si Gyeonggi-do 16677 (KR); CHEA, Kyoungbeom, Suwon-si Gyeonggi-do 16677 (KR)
(74) Representative: HGF
(86) International application number: PCT/KR2023/006180
(87) International publication number: WO 2023/214855

(57) **Abstract**

The disclosure relates to a 5G or 6G communication system for supporting a higher data transmission rate. According to an embodiment of the disclosure, a method for operation of a first high availability (HA) pod included in a first cluster may comprise the steps of: while a first element management system (EMS) of the first cluster is in an active state, identifying whether a failure has occurred in the first EMS; when the failure has occurred in the first EMS, transmitting, to a second HA pod included in a second cluster, a first message instructing to change a state of a second EMS of the second cluster, which is logically distinguished from the first cluster and includes the second EMS, from a standby state to the active state; and changing a state of the first EMS from the active state to the standby state.

## Description

### [Technical Field]

The disclosure relates generally to a container-based cluster environment, and more specifically, to a method and apparatus for controlling a redundancy operation of a container application in a container-based multi-cluster environment.

### [Background Art]

A container virtualizes a basic operating system (OS) and allows a containerized app to recognize including an OS itself, such as a central processing unit (CPU), a memory, a file storage, and network connection. Therefore, the container can be distributed and executed anywhere.

Since the container shares a host OS, the container does not need to boot an OS or load a library. Therefore, the container can be made much more efficient and lightweight. A container-based application can start in seconds, and can fit more instances of the application to a machine compared to a virtual machine (VM) scenario. A shared OS approach method has an additional advantage that an overhead is reduced in relation with maintenance such as patches, updates, etc.

### [Disclosure of Invention]

### [Technical Problem]

Based on the discussion described above, the disclosure is to present a method and apparatus for controlling a redundancy operation of a container application in a container-based multi-cluster environment.

In addition, the disclosure is to present a method and apparatus for changing a state of a container application of a candidate cluster when a failure occurs in a container-based multi-cluster environment.

In addition, the disclosure is to present a method and apparatus for setting a container application of a candidate cluster in a container-based multi-cluster environment.

### [Solution to Problem]

According to embodiments of the disclosure, a method for operation of a first high availability (HA) pod included in a first cluster may include, while a first element management system (EMS) of the first cluster is in an active state, identifying whether a failure has occurred in the first EMS, when the failure has occurred in the first EMS, transmitting, to a second HA pod included in a second cluster, a first message instructing to change a state of a second EMS of the second cluster, which is logically distinguished from the first cluster and includes the second EMS, from a standby state to the active state, and changing a state of the first EMS from the active state to the standby state.

According to embodiments of the disclosure, the method may further include identifying state information of the first EMS and state information of the second EMS, when the state of the first EMS and the state of the second EMS are all the active state or are all the standby state, determining to operate a state of one EMS among the state of the first EMS and the state of the second EMS as the active state in accordance with priority, and determining to operate a state of the other EMS as the standby state.

According to embodiments of the disclosure, the priority may be predetermined, be determined according to the order of starting first, or be determined randomly in the case of starting simultaneously.

According to embodiments of the disclosure, identifying whether the failure has occurred in the first EMS may include checking whether a launcher process is running, checking whether all processes required for a specific pod are running according to a configuration for each Pod, checking whether a DB connection return is successful, and checking whether a return is successful after checking a preset process.

According to embodiments of the disclosure, the method may include transmitting a second message for identifying the second cluster to the second HA pod, including the second HA pod as a candidate to which to transmit the first message when a response message to the second message is received from the second HA pod, and excluding the second HA pod from the candidate to which to transmit the first message when the response message to the second message is not received from the second HA pod.

According to embodiments of the disclosure, the method may include, when the failure of the first EMS is recovered, transmitting, to the second HA pod, a third message instructing to change the state of the second EMS from the active state to the standby state, and changing the state of the first EMS from the standby state to the active state.

According to embodiments of the disclosure, the first cluster may include a set of nodes of a physical environment or virtual environment that hosts a container-based application, the first cluster may include a worker node and a master node, the worker node may include a node on which one or more containers are deployed, and the master node may include a node that manages the worker node.

According to embodiments of the disclosure, a method for operation of a second high availability (HA) pod included in a second cluster may include, while a second element management system (EMS) of the second cluster is in a standby state, receiving, from a first HA pod included in the first cluster, a first message instructing to change the second EMS from the standby state to an active state, and changing a state of the second EMS from the standby state to the active state. The first cluster may be logically distinguished from the second cluster, and the first message may be transmitted according as a failure has occurred in the first EMS of the first cluster.

According to embodiments of the disclosure, the method may include, while the state of the second EMS is in the standby state, transmitting a second message for identifying the first EMS to the first HA pod, when a response message to the second message is received from the first HA pod, maintaining the state of the second EMS as the standby state, and when the response message to the second message is not received from the first HA pod, changing the state of the second EMS from the standby state to the active state.

According to embodiments of the disclosure, the method may further include receiving, from the first HA pod, a third message instructing to change the second EMS from the active state to the standby state, and changing the second EMS from the active state to the standby state. The third message may be transmitted according as the failure of the first EMS is recovered.

According to embodiments of the disclosure, the second cluster may include a set of nodes of a physical environment or virtual environment that hosts a container-based application, the second cluster may include a worker node and a master node, the worker node may include a node on which one or more containers are deployed, and the master node may include a node that manages the worker node.

According to embodiments of the disclosure, a first cluster including a first high availability (HA) pod may include a transceiver, and at least one processor. The at least one processor may be configured to configure the first HA pod, while a first element management system (EMS) of the first cluster is in an active state, identify whether a failure has occurred in the first EMS, when the failure has occurred in the first EMS, transmit, to a second HA pod included in a second cluster, a first message instructing to change a second EMS of the second cluster, which is logically distinguished from the first cluster, from a standby state to the active state, and change the first EMS from the active state to the standby state.

According to embodiments of the disclosure, the at least one processor may be configured to configure the first HA pod, identify state information of the first EMS and state information of the second EMS, when the state of the first EMS and the state of the second EMS are all the active state or are all the standby state, determine to operate a state of one EMS among the state of the first EMS and the state of the second EMS as the active state in accordance with priority, and determine to operate a state of the other EMS as the standby state.

According to embodiments of the disclosure, the priority may be predetermined, be determined according to the order of starting first, or be determined randomly in the case of starting simultaneously.

According to embodiments of the disclosure, the at least one processor may be configured to, when identifying whether the failure has occurred in the first EMS, configure the first HA pod, check whether a launcher process is running, check whether all processes required for a specific pod are running according to a configuration for each Pod, check whether a DB connection return is successful, and check whether a return is successful after checking a preset process.

According to embodiments of the disclosure, the at least one processor may be configured to configure the first HA pod, transmit a second message for identifying the second cluster to the second HA pod, include the second HA pod as a candidate to which to transmit the first message when a response message to the second message is received from the second HA pod, and exclude the second HA pod from the candidate to which to transmit the first message when the response message to the second message is not received from the second HA pod.

According to embodiments of the disclosure, the at least one processor may be configured to configure the first HA pod, when the failure of the first EMS is recovered, transmit, to the second HA pod, a third message instructing to change a state of the second EMS from the active state to the standby state, and change the state of the first EMS from the standby state to the active state.

According to embodiments of the disclosure, a second cluster including a second high availability (HA) pod may include a transceiver, and at least one processor. The at least one processor may be configured to configure the second HA pod, while an element management system (EMS) of the second cluster is in a standby state, receive, from a first HA pod included in a first cluster, a first message instructing to change the second EMS from the standby state to an active state, and change a state of the second EMS from the standby state to the active state. The first cluster may be logically distinguished from the second cluster, and the first message may be transmitted according as a failure has occurred in a first EMS of the first cluster.

According to embodiments of the disclosure, the at least one processor may be configured to configure the second HA pod, while the state of the second EMS is in the standby state, transmit a second message for identifying the first EMS to the first HA pod, when a response message to the second message is received from the first HA pod, maintain the state of the second EMS as the standby state, and when the response message to the second message is not received from the first HA pod, change the state of the second EMS from the standby state to the active state.

According to embodiments of the disclosure, the at least one processor may be configured to configure the second HA pod, receive, from the first HA pod, a third message instructing to change the state of the second EMS from the active state to the standby state, and change the state of the second EMS from the active state to the standby state. The third message may be transmitted according as the failure of the first EMS operating in the first cluster is recovered.

### [Advantageous Effects of Invention]

The disclosure may present a method and apparatus for changing a state of a container application of a candidate cluster when a failure occurs in a container-based multi-cluster environment, and present a smooth transmission and reception between a network and a cluster even when the failure occurs.

The disclosure may set a container application of a candidate cluster in a container-based multi-cluster environment, and present a smooth transmission and reception between a network and a cluster even when a failure occurs.

Effects obtainable from the disclosure are not limited to the effects mentioned above, and other effects not mentioned may be clearly understood by those skilled in the art to which the disclosure pertains from the description below.

### [Brief Description of Drawings]

FIG. 1 illustrates a container-based cluster environment according to various embodiments of the disclosure.
FIG. 2 illustrates a scenario of setting a candidate element management system (EMS) of a candidate cluster in a container-based cluster environment according to an embodiment of the disclosure.
FIG. 3 illustrates a scenario of changing a state of a candidate EMS of a candidate cluster when a failure occurs in a container-based cluster environment according to an embodiment of the disclosure.
FIG. 4 illustrates a scenario of rolling back a state of a first EMS of a first cluster when a failure is recovered in a container-based cluster environment according to an embodiment of the disclosure.
FIG. 5 illustrates a scenario when a first EMS of a first cluster and a second EMS of a second cluster are in the same state in a container-based cluster environment according to an embodiment of the disclosure.
FIG. 6 illustrates a scenario of determining whether a failure has occurred in a container-based cluster environment according to an embodiment of the disclosure.
FIG. 7 illustrates a scenario of storing data in a container-based cluster environment according to an embodiment of the disclosure.
FIG. 8 illustrates a flowchart of changing a state of a candidate EMS of a candidate cluster when a failure occurs in a container-based cluster environment according to an embodiment of the disclosure.
FIG. 9 illustrates a flowchart of changing a state of a candidate EMS of a candidate cluster when a failure occurs in a container-based cluster environment according to an embodiment of the disclosure.
FIG. 10 illustrates a flowchart when a first cluster and a second EMS of a second cluster are in the same state in a container-based cluster environment according to an embodiment of the disclosure.
FIG. 11 illustrates a flowchart of determining priority when a first cluster and a second EMS of a second cluster are in the same state in a container-based cluster environment according to an embodiment of the disclosure.
FIG. 12 illustrates a flowchart of setting a state of a candidate EMS of a candidate cluster in a container-based cluster environment according to an embodiment of the disclosure.
FIG. 13 illustrates a flowchart of setting a state of a candidate EMS of a candidate cluster in a container-based cluster environment according to an embodiment of the disclosure.
FIG. 14 illustrates an apparatus diagram of setting a candidate EMS of a candidate cluster in a container-based cluster environment according to an embodiment of the disclosure.

### [Mode for Carrying out the Invention]

Embodiments of the disclosure will be described below in detail with reference to the attached drawings. In addition, when it is determined that a specific description of a related known function or construction may unnecessarily obscure the gist of the disclosure in explaining the disclosure, a detailed description thereof will be omitted. In addition, the terms described below are terms defined in consideration of functions in the disclosure, and may vary depending on a user or operator's intention or practice, etc. Therefore, the definitions should be made based on the contents throughout this specification.

In addition, in specifically explaining the embodiments of the disclosure, the main gist of the disclosure may be applied even to other communication systems having similar technical backgrounds and channel types with slight modifications without significantly departing from the scope of the disclosure, and this will be done at the discretion of a person skilled in the art in the technical field of the disclosure.

Advantages and features of the disclosure, and a method for achieving them, will become clear with reference to embodiments described in detail below together with the attached drawings. However, the disclosure is not limited to the embodiments disclosed below, but may be implemented in various different forms, and the embodiments are presented only to make the disclosure of the disclosure complete and to fully inform a person skilled in the art to which the disclosure pertains of the scope of the disclosure, and the disclosure is defined only by the scope of the claims. The same reference numerals throughout the specification refer to the same components.

At this time, it will be understood that each block of the processing flowchart drawings and combinations of the flowchart drawings may be performed by computer program instructions. Since these computer program instructions may be installed in a processor of a general-purpose computer, a special-purpose computer, or other programmable data processing equipment, the instructions executed by the processor of the computer or other programmable data processing equipment provide means for performing functions described in flowchart block(s). These computer program instructions may also be stored in a computer-available or computer-readable memory that may be directed to the computer or other programmable data processing equipment in order to implement the functions in a specific method, so the instructions stored in the computer-available or computer-readable memory may also produce an article of manufacture involving an instruction means for performing the functions described in the flowchart block(s). Since the computer program instructions may also be installed in the computer or other programmable data processing equipment, the instructions executed by the computer or other programmable data processing equipment may also present steps for performing the functions described in the flowchart block(s) by performing a series of operational steps in the computer or other programmable data processing equipment and providing a computer-executed process.

In addition, each block may represent a module, a segment or a portion of a code that includes one or more executable instructions for executing a specific logical function(s). It should also be noted that in some alternative implementation examples, the functions mentioned in the blocks may be provided out of order. For example, two blocks shown in succession may actually be executed substantially simultaneously, or the blocks may sometimes be executed in reverse order according to the corresponding function.

In this case, the term '~part' used in this embodiment means software, or a hardware component such as FPGA or ASIC, and the '~part' performs certain roles. However, the '~part' is not limited to software or hardware. The '~part' may be also configured to be in an addressable storage medium and may be also configured to run one or more processors. Thus, as an example, the '~part' may include components such as software components, object-oriented software components, class components, and task components, processes, functions, properties, procedures, subroutines, segments of program code, drivers, firmware, microcode, circuits, data, databases, data structures, tables, arrays, and variables. Functions presented within the components and the '~part's may be combined into a smaller number of components and '~part's, or be further separated into additional components and '~part's. In addition, the components and the '~part's may be also implemented to run one or more CPUs within a device or a secure multimedia card.

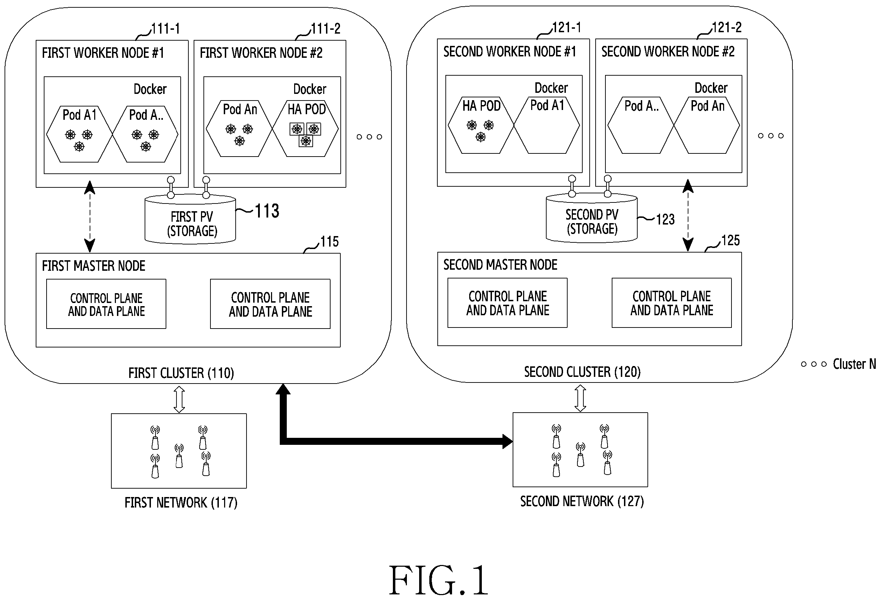

FIG. 1 illustrates a container-based cluster environment according to various embodiments of the disclosure.

Referring to FIG. 1, a network environment may include a first cluster 110 and a second cluster 120. In FIG. 1, a cluster is illustrated as including the first cluster 110 and the second cluster 120, but this is only for convenience of explanation and does not exclude an environment in which there are three or more clusters, etc. In addition, the network environment may include a first network 117 and a second network 127. In FIG. 1, a network is illustrated as including the first network 117 and the second network 127, but this is only for convenience of explanation and does not exclude an environment in which there are three or more networks, etc.

The first cluster 110 may include one or more first worker nodes 111-1 and 111-2, a first persistent volume (PV) 113, and a first master node 115. The first cluster 110 may communicate with the first network 117. The first cluster 110 may communicate with the second network 127. The first network 117 and the second network 127 may be distinguished logically or regionally.

The second cluster 120 may be logically or regionally distinguished from the first cluster 110. The second cluster 120 may include one or more second worker nodes 121-1 and 121-2, a second PV 123, and a master node 125. The second cluster 120 may communicate with the first network 117. The second cluster 120 may communicate with the second network 127.

Hereinafter, the description of each of the one or more first cluster 110 and second cluster 120 may be applied as the description of a cluster. The description of the one or more first worker nodes 111-1 and 111-2 and the one or more second worker nodes 121-1 and 121-2 may be applied as the description of a worker node. The description of the first PV 113 and the second PV 123 may be applied as the description of a PV. The description of the first master node 115 and the second master node 125 may be applied as the description of a master node. The description of the first network 117 and the second network 127 may be applied as the description of a network.

A cluster refers to a set of nodes of a physical environment or virtual environment that hosts a container-based application. The cluster may be largely divided into a worker node and a master node. The worker node may include a node on which one or more containers are deployed, and the master node may include a node that manages the worker node. A manager may control the entire cluster through the master node of the cluster.

The worker node may include multiple pods. The container-based cluster may deploy, on the pods, containers to be executed at the worker node, and execute them. The worker node may include a virtual machine (VM) or physical machine (PM) depending on the cluster. Each worker node is managed by the master node. Specifically, each worker node is managed by a control plane within the master node. According to an embodiment of the disclosure, each worker node may include a service necessary to run the pod. According to an embodiment of the disclosure, the cluster may include several worker nodes.

The pod may be provided and managed by the container-based cluster, and is the smallest computing unit distributable. According to an embodiment of the disclosure, the pod includes a group of one or more containers that include a shared storage, a network resource and a specification of a container execution method. For example, the shared storage may include a PV.

The PV includes a storage of the cluster. Specifically, the PV includes the storage of the cluster that has been provisioned by the manager or provisioned using a storage class. The PV includes a resource of the cluster, just as the worker node includes the resource of the cluster. The PV has a lifespan independent of an individual pod that uses the PV.

The master node may include a control plane and a data plane. According to an embodiment of the disclosure, the control plane performs a role of assigning a classless inter domain routing (CIDR) block to a node when the worker node is registered. According to an embodiment of the disclosure, the control plane performs a role of maintaining a list of worker nodes up to date, together with a list of available systems of a cloud provider. Specifically, the control plane may ask the cloud provider whether a VM of the worker node may continue to be used when the corresponding worker node is abnormal during running in a cloud environment. When the worker node cannot continue to be used, the control plane may delete the corresponding worker node from the list of worker nodes. According to an embodiment of the disclosure, the control plane may monitor a state of the node.

The network may include a radio access network, and may serve as the radio access network. The network may include an object that presents a wireless channel for connecting a 5G core network. The network may be connected to the cluster.

The container virtualizes a basic operating system (OS) and allows a containerized app to recognize including an OS itself, such as a central processing unit (CPU), a memory, a file storage, and network connection. Therefore, the container may be distributed and executed anywhere. The container presents flexibility capable of running a cloud application in a physical or virtual infrastructure. The container packages services that make up an application and makes portable in a variety of computer environments for the sake of development, test, and production use. The use of the container may scale up application objects quickly with a sudden increase of demand. In addition, because the container uses an operating system (OS) resource of a host, the container is more lightweight than a virtual machine (VM). In a Kubernetes environment, the cluster may distribute an application or a service to the network, and this is considered a cluster for a single setting.

When an application included in the container-based cluster includes a stateful application, when one container-based cluster is in an active state, the other container-based cluster is maintained in a standby state. The stateful application may include a state-dependent application. When an active state - active state is maintained, there may be the following drawbacks:
- Operational complexity: In the active state - active state, network elements (NEs) are distributed between clusters, and otherwise, an operator is prone to errors.
- Data conflict: In the active state - active state, when both the clusters are all running, when both the clusters are all updated, synchronization may be delayed and services may not be guaranteed or may not work properly.
- Synchronization data is configured in both directions, and the data conflict may occur during data replication.

However, the container-based cluster does not support an active state - standby state. For example, when there are two container-based clusters, the active state - standby state means that when an EMS of one container-based cluster is in an active state, an EMS of the other container-based cluster is in a standby state. The disclosure proposes a solution to solve the drawback that the container-based cluster does not support the active state - standby state. By using an HA pod, the disclosure may solve the drawback of not supporting the active state - standby state. For example, by using the HA pod, the disclosure controls a state between the container-based clusters. Specifically, by using the HA pod, the disclosure may convert a state of the EMS of the container-based cluster into the active state or standby state.

In addition, the use of the HA pod may solve the following drawbacks.
- A state of an EMS of one cluster should become an active state, and a state of an EMS of the other cluster should become a standby state or a candidate cluster such as a backup cluster.
- When a failure occurs in an EMS operating in one cluster, a standby EMS of a cluster of a standby state or a candidate EMS of a candidate cluster should become an active EMS of a cluster of an active state without affecting a service and user intervention.
- When states of EMSs of all clusters are the active states simultaneously due to network connection, when a state of an EMS of one cluster is the active state without a user intervention, a state of an EMS of the other cluster should be made to the standby state.
- Data between clusters that vary depending on a state of data should be replicated.
- When a conflict cluster is recovered based on a user basic setting, the conflict cluster should be automatically rolled back.

According to an embodiment of the disclosure, by using the HA pod, a candidate EMS of a candidate cluster such as a backup EMS of a backup cluster may be set in preparation for when a failure occurs in an EMS operating in a cluster. In addition, according to an embodiment of the disclosure, when a failure occurs in an element management system (EMS) operating in a cluster of an active state, the failure may be solved by converting a standby EMS of a cluster of a standby state to an active state by using the HA pod. In addition, according to an embodiment of the disclosure, data between the clusters may be replicated using the HA pod. In addition, according to an embodiment of the disclosure, when a failure EMS is recovered from a failure, based on a user basic setting, the failure EMS may be rolled back using the HA pod. In summary, the following drawbacks may be solved using the HA pod.

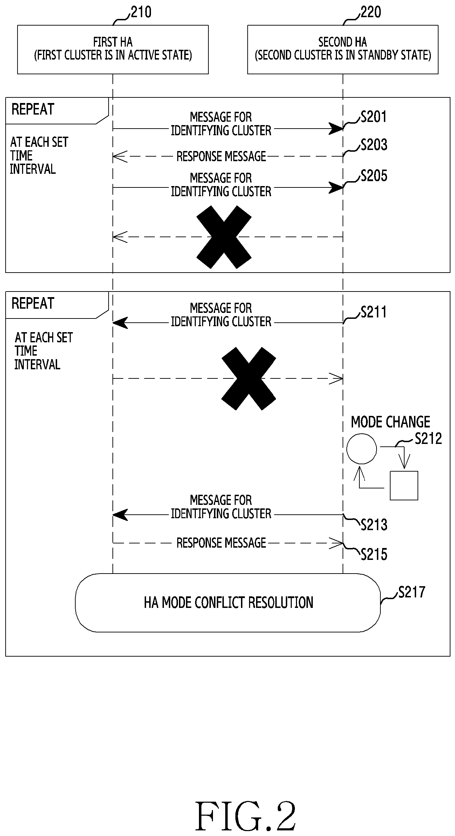

Specific methods in which a cluster may configure the HA pod and solve the aforementioned drawbacks are described below through FIGS. 2 to 14.

FIG. 2 illustrates a scenario of setting an EMS of a candidate cluster in a container-based cluster environment according to an embodiment of the disclosure. Referring to FIG. 2, a first HA pod 210 may include an HA pod included in a first cluster 110 of an active state. In addition, a second HA pod 220 may include an HA pod included in a second cluster 120 of a standby state. The setting of the candidate cluster may be in preparation for a failure of a first EMS operating in the first cluster 110 that may occur in the future. A dotted line shown in FIG. 2 may correspond to a message including a result of a requested message.

In an embodiment, when the first HA pod transmits a message for identifying an EMS of a cluster:
According to an embodiment of the disclosure, the first HA pod 210 may transmit a message for identifying an EMS of a cluster to the second HA pod 220 (step S201). The first HA pod 210 may transmit the message for identifying the EMS of the cluster at each set time interval. The first HA pod 210 may transmit may transmit the message for identifying the EMS of the cluster and set a candidate EMS of a candidate cluster for the first cluster 110. The candidate EMS of the candidate cluster may include an EMS of a cluster that may become an active state from a standby state. A second EMS of the second cluster 120 may include a message reception object that may include the candidate EMS of the candidate cluster, and the first HA pod 210 may transmit the message to the second HA pod 220 and set the candidate EMS of the candidate cluster. Through the setting of the candidate EMS of the candidate cluster, the first HA pod 210 may activate the second EMS of the second cluster 120 when a failure occurs in a EMS operating in the first cluster 110. That is, the first HA pod 210 may set the candidate EMS of the candidate cluster operating in the first EMS of the first cluster 110 and prepare for when the failure occurs in the first EMS.

According to an embodiment of the disclosure, the first HA pod 210 may receive a response message from the second HA pod 220 (step S203). The response message may include information that the candidate EMS of the candidate cluster may be included. The second HA pod 220 may transmit, to the first HA pod 210, a response message including information that the second EMS of the second cluster 120 may include the candidate EMS of the candidate cluster. When the first HA pod 210 receives the response message, the first HA pod 210 may include the second EMS of the second cluster 120 as the candidate cluster. When the second EMS of the second cluster 120 is included as the candidate EMS of the candidate cluster, when a failure occurs in the EMS operating in the first cluster 110, the second HA pod 220 included in the second cluster 120 may include an object that receives a message instructing to change from a standby state to an active state. Through the transmitting of the response message, the second HA pod 220 may notify that it may become a candidate, and prepare for when the failure occurs in the first EMS operating in the first cluster 110.

According to an embodiment of the disclosure, the first HA pod 210 may transmit a message for identifying an EMS of a cluster to the second HA pod 220 (step S205). After a set time interval from a start time of step S201, the first HA pod 210 may transmit the message for identifying the EMS of the cluster in step S205. The first HA pod 210 may transmit the message for identifying the EMS of the cluster and set the candidate EMS of the candidate cluster for the first EMS of the first cluster 110. The candidate EMS of the candidate cluster may include an EMS of a cluster that may become an active state from a standby state. The second EMS of the second cluster 120 may include a message reception object that may include the candidate EMS of the candidate cluster, and the first HA pod 210 may transmit the message to the second HA pod 220 and set the candidate EMS of the candidate cluster. Through the setting of the candidate EMS of the candidate cluster, the first HA pod 210 may activate the second EMS of the second cluster 120 when a failure occurs in the EMS operating in the first cluster 110. That is, the first HA pod 210 may set the candidate EMS of the candidate cluster for the first EMS of the first cluster 110 and prepare for when the failure occurs in the first EMS.

According to an embodiment of the disclosure, after step S205, the first HA pod 210 may fail to receive a response message from the second HA pod 220. When the first HA pod 210 fails to receive the response message, the first HA pod 210 may exclude the second EMS of the second cluster 120 from the candidate EMS of the candidate cluster. Even if a failure occurs in the first EMS operating in the first cluster 110, the first HA pod 210 does not transmit a message instructing to change a state to the second HA pod 220.

In an embodiment, when the second HA pod transmits a message for identifying an EMS of a cluster:
According to an embodiment of the disclosure, the second HA pod 220 may transmit a message for identifying an EMS of a cluster to the first HA pod 210 (step S211). The second HA pod 220 may transmit the message for identifying the EMS of the cluster at each set time interval. The second HA pod 220 may transmit the message for identifying the EMS of the cluster and determine a state of the second EMS of the second cluster 120. The second HA pod 220 may transmit the message and determine whether the second EMS of the second cluster 120 will change from the standby state to the active state. Through the setting of the candidate EMS of the candidate cluster, the second HA pod 220 may activate the first EMS of the first cluster 110 when a failure occurs in the EMS operating in the second cluster 120. That is, the second HA pod 220 may set the candidate EMS of the candidate cluster operating in the second cluster 120 and prepare for when the failure occurs in the second EMS.

According to an embodiment of the disclosure, after step S211, the second HA pod 220 may fail to receive a response message from the first HA pod 210. When the second HA pod 220 fails to receive the response message from the first HA pod 210, the second HA pod 220 may change a state of the second EMS of the second cluster 120. The second HA pod 220 may change the state of the second EMS of the second cluster 120 from the standby state to the active state. This is to maintain an EMS of one cluster in the standby state when an EMS of the other cluster is in the active state. When the second HA pod 220 fails to receive the response message from the first HA pod 210, the second HA pod 220 may determine a state of the first EMS of the first cluster 110 as the standby state. According to an embodiment of the disclosure, when the second HA pod determines the state of the first EMS of the first cluster 110 as the standby state, the second HA pod may change the state of the second EMS of the second cluster 120 to the active state and maintain an active state - standby state (step S212).

According to an embodiment of the disclosure, the second HA pod 220 may transmit a message for identifying an EMS of a cluster to the first HA pod 210 (step S213). For example, after a set time interval from a start time of step S211, the second HA pod 220 may transmit the message for identifying the EMS of the cluster in step S213. According to an embodiment of the disclosure, the second HA pod 220 may transmit the message for identifying the EMS of the cluster and determine a state of the second EMS of the second cluster 120. Specifically, the second HA pod 220 may transmit the message and determine whether the state of the second EMS of the second cluster 120 will change from the active state to the standby state. Through the setting of the candidate EMS of the candidate cluster, the second HA pod 220 may activate the candidate EMS of the first cluster 110 when a failure occurs in the second EMS operating in the second cluster 120. The setting of the candidate EMS of the candidate cluster in the second HA pod 220 may be in preparation for the failure of the second EMS operating in the second cluster 120 that may occur in the future.

According to an embodiment of the disclosure, the second HA pod 220 may receive a response message from the first HA pod 210 (step S215). The second HA pod 220 may determine a state of the first EMS of the first cluster, based on the response message. Through the transmission of the response message, the first HA pod 210 may notify that it may become a candidate, and prepare for the failure of the second EMS operating in the second cluster 110.

According to an embodiment of the disclosure, the second HA pod 220 may change a state of the second EMS of the second cluster 120, based on the response message (step S217). According to an embodiment of the disclosure, when the state of the first EMS of the first cluster 110 and the state of the second EMS of the second cluster 120 are all the active state or are all the standby state, the second HA pod 220 may change the state of the second EMS of the second cluster 120, based on priority. According to an embodiment of the disclosure, when the second HA pod 220 determines the state of the first EMS of the first cluster as the standby state, based on the response message, the second HA pod 220 may maintain the state of the second EMS of the second cluster 120 as the active state. According to an embodiment of the disclosure, when the second HA pod 220 determines the state of the first EMS of the first HA pod cluster as the active state, based on the response message, the second HA pod 220 may change the state of the second EMS of the second cluster 120. Specifically, when the second HA pod 220 determines the state of the first EMS of the first HA pod cluster as the active state, based on the response message, the second HA pod 220 may change the state of the second EMS of the second cluster 120 from the active state to the standby state.

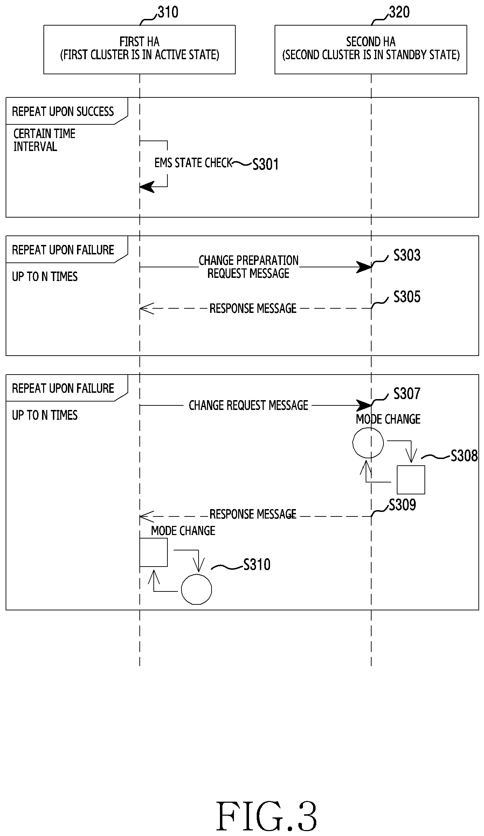

After the candidate EMS of the candidate cluster is set, it is necessary to transmit a message for preparing for a failure of the first EMS operating in the first cluster 110 that may occur in the future. This is described in detail in the description of FIG. 3.

FIG. 3 illustrates a scenario of changing a state of a candidate EMS of a candidate cluster when a failure occurs in a container-based cluster environment according to an embodiment of the disclosure. Referring to FIG. 3, a first HA pod 310 may include an HA pod included in a first cluster 110 of an active state. In addition, a second HA pod 320 may include an HA pod included in a second cluster 120 of a standby state. According to an embodiment of the disclosure, changing the state of the candidate EMS of the candidate cluster when the failure occurs may include changing the state of the candidate EMS of the candidate cluster from the standby state to the active state. According to an embodiment of the disclosure, the candidate EMS of the candidate cluster may include a second EMS of the second cluster 120. According to an embodiment of the disclosure, the scenario of FIG. 3 may include a scenario after the second HA pod 220 transmits a response message responsive to a message for identifying an EMS of a cluster of the first HA pod 210. A dotted line shown in FIG. 3 may correspond to a message including a result of a requested message.

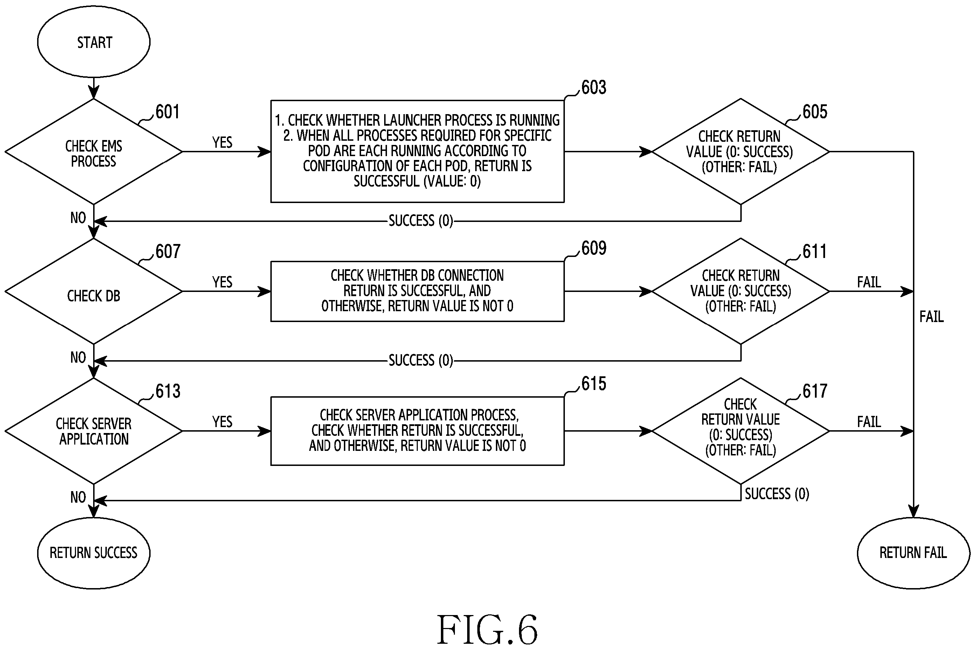

According to an embodiment of the disclosure, the first HA pod 310 may check a state of a first EMS operating in the first cluster 110 (step S301). The EMS state check may be repeated according to a regular time interval. The first HA pod 310 may repeat the EMS state check according to the regular time interval when an EMS state check result value corresponds to success. According to an embodiment of the disclosure, the state check of the first EMS may include a check of whether a failure has occurred in the first EMS. A specific failure occurrence determination process is described in detail in FIG. 6.

According to an embodiment of the disclosure, the first HA pod 310 may transmit a change preparation request message to the second HA pod 320 (step S303). The EMS state check may be repeated N times. The first HA pod 310 may repeat the EMS state check N times when an EMS state check result value corresponds to failure. According to an embodiment of the disclosure, the change preparation request message may include a switchover preparation request message. According to an embodiment of the disclosure, the first HA pod 310 may transmit the change preparation request message when a first EMS state check result value corresponds to failure. According to an embodiment of the disclosure, when the EMS state check result value corresponds to failure even after the EMS state check is repeated N times, the first HA pod 310 may transmit the change preparation request message. According to an embodiment of the disclosure, the change preparation request message may include a preparation message for transmitting a change request message.

According to an embodiment of the disclosure, the first HA pod 310 may receive a response message to the change preparation request message from the second HA pod 320 (step S305). According to an embodiment of the disclosure, the response message may include information that a state of the second EMS of the second cluster 120 may change. Specifically, the response message may include information that the state of the second EMS of the second cluster 120 may change from the standby state to the active state. The first HA pod 310 may transmit a change request message, based on the response message. According to an embodiment of the disclosure, the transmission of the response message (step S305) may be omitted.

According to an embodiment of the disclosure, the first HA pod 310 may transmit the change request message to the second HA pod 320 (step S307). According to an embodiment of the disclosure, the first HA pod 310 may transmit the change request message after receiving the response message. According to an embodiment of the disclosure, the EMS state check may be repeated N times. The first HA pod 310 may repeat the EMS state check N times when an EMS state check result value corresponds to failure. According to an embodiment of the disclosure, the first HA pod 310 may transmit the change request message when a first EMS state check result value corresponds to failure. According to an embodiment of the disclosure, the first HA pod 310 may transmit the change request message, when the EMS state check result value corresponds to failure even after the EMS state check is repeated N times. Specifically, the change request message may include a message instructing to change a state of the second EMS of the second cluster 120 from the standby state to the active state. After receiving the change request message, the second HA pod 320 may change the state of the second EMS of the second cluster 120 (step S308). Specifically, the second HA pod 320 may change the state of the second EMS of the second cluster 120 from the standby state to the active state. The transmission of the change request message by the first HA pod 310 is to maintain a state of an EMS of one cluster in the standby state when a state of an EMS of the other cluster is the active state. According to an embodiment of the disclosure, the state of the second EMS of the second cluster 120 must change to the active state when the state of the EMS of the first cluster 110 changes to the standby state, wherein the state of the EMS of one cluster is maintained as the standby state when the state of the EMS of the other cluster is the active state. When the first HA pod identifies a failure of the first EMS, the first HA pod 310 is necessary to change the state of the first EMS of the first cluster 110 to the standby state. At this time, the second HA pod 320 is necessary to change the state of the second EMS of the second cluster 120 to the active state, wherein the state of the EMS of one cluster is maintained as the standby state when the state of the EMS of the other cluster is the active state.

According to an embodiment of the disclosure, the first HA pod 310 may receive a response message to the change request message from the second HA pod 320 (step S309). According to an embodiment of the disclosure, the response message may include information that the state of the second EMS of the second cluster 120 has been changed. Specifically, the response message may include information that the state of the second EMS of the second cluster 120 has been changed from the standby state to the active state. The first HA pod 310 may change the state of the first EMS of the first cluster 110, based on the response message. Specifically, the first HA pod 310 may change the state of the first EMS of the first cluster 110 from the active state to the standby state. According to an embodiment of the disclosure, the transmission of the response message (step S309) may be omitted.

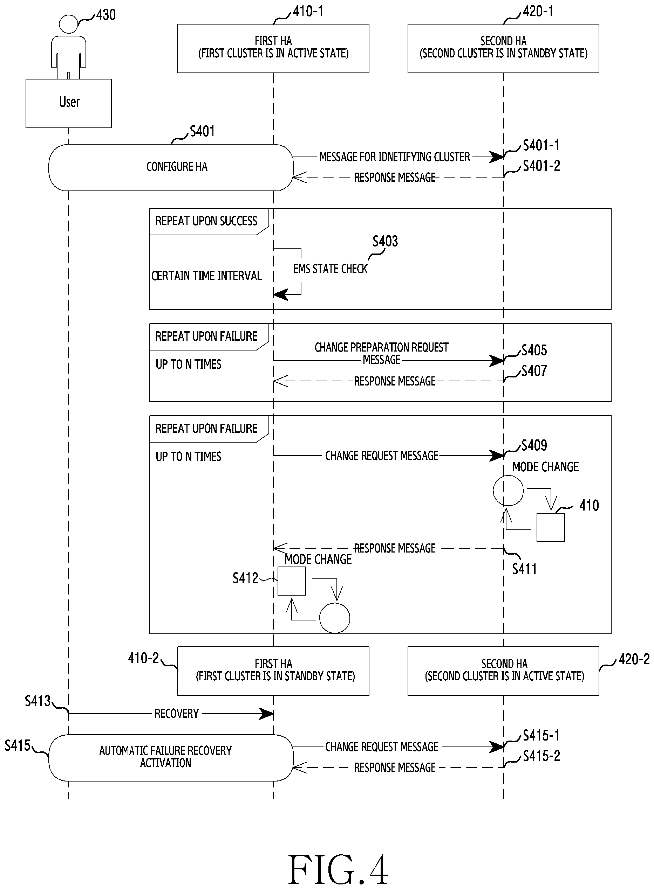

When the failure of the first EMS of the first cluster 110 is recovered, it is necessary to change the state. This is described in detail in the description of FIG. 4.

FIG. 4 illustrates a scenario of rolling back a state of a first EMS of a first cluster when a failure is recovered in a container-based cluster environment according to an embodiment of the disclosure. Referring to FIG. 4, a first HA pod 410-1 may include an HA pod included in a first cluster 110 of an active state. A first HA pod 410-2 may include an HA pod included in the first cluster 110 of a standby state. A second HA pod 420-1 may include an HA pod included in a second cluster 120 of the standby state. A second HA pod 420-2 may include an HA pod included in the second cluster 120 of the active state. According to an embodiment of the disclosure, changing a state of a first EMS of the first cluster 110 when a failure is recovered may include changing the state of the first EMS of the first cluster 110 from the standby state to the active state. According to an embodiment of the disclosure, the scenario of FIG. 4 may include a scenario after the second HA pod 220 transmits a response message responsive to a switchover message. A dotted line shown in FIG. 4 may correspond to a message including a result of a requested message.

According to an embodiment of the disclosure, step S401 is composed of step S401-1 and step S401-2, and step S401-1 may correspond to step S201 of FIG. 2, and step S401-2 may correspond to step S203 of FIG. 2. According to an embodiment of the disclosure, the first HA pod 410-1 included in the first cluster 110 of the active state may transmit a message for identifying a cluster to the second HA pod 420-2 included in the second cluster 120 of the standby state (step S401-1). According to an embodiment of the disclosure, the first HA pod 410-1 may transmit the message for identifying an EMS of the cluster and set a candidate EMS of a candidate cluster for a first EMS of the first cluster 110. According to an embodiment of the disclosure, the first HA pod 410-1 may receive a response message from the second HA pod 420-1 (step 401-2). According to an embodiment of the disclosure, the second HA pod 420-1 may transmit, to the first HA pod 410-1, the response message including information that a second EMS of the second cluster 120 may include the candidate EMS of the candidate cluster.

According to an embodiment of the disclosure, step S403 may correspond to step S301. According to an embodiment of the disclosure, the first HA pod 410-1 may check a state of the first EMS operating in the first EMS of the first cluster 110 (step S403). According to an embodiment of the disclosure, the state check of the first EMS may include a check of whether a failure has occurred in the first EMS.

According to an embodiment of the disclosure, step S405 may correspond to step S303. According to an embodiment of the disclosure, the first HA pod 410-1 may transmit a change preparation request message to the second HA pod 420-1 (step S405). According to an embodiment of the disclosure, the change preparation request message may include a preparation message for transmitting a change request message.

According to an embodiment of the disclosure, step S407 may correspond to step S305. According to an embodiment of the disclosure, the first HA pod 410-1 may receive a response message responsive to the change preparation request message from the second HA pod 420-1 (step S407). According to an embodiment of the disclosure, the response message may include information that a state of the second EMS of the second cluster 120 may be changed. Specifically, the response message may include information that the state of the second EMS of the second cluster 120 may change from the standby state to the active state. According to an embodiment of the disclosure, the transmission of the response message (step S407) may be omitted.

According to an embodiment of the disclosure, step S409 may correspond to step S307. According to an embodiment of the disclosure, the first HA pod 410-1 may transmit a change request message to the second HA pod 420-1 (step S409). According to an embodiment of the disclosure, the first HA pod 410-1 may transmit the change request message after receiving the response message. Specifically, the change request message may include a message instructing to change the state of the second EMS of the second cluster 120 from the standby state to the active state. After receiving the change request message, the second HA pod 420-1 may change the state of the second EMS of the second cluster 120 (step S410). Specifically, the second HA pod 420-1 may change the state of the second EMS of the second cluster 120 from the standby state to the active state.

According to an embodiment of the disclosure, step S411 may correspond to step S309. According to an embodiment of the disclosure, the first HA pod 410-1 may receive a response message responsive to the change request message from the second HA pod 420-1 (step S411). According to an embodiment of the disclosure, the response message may include information that the state of the second EMS of the second cluster 120 has been changed. Specifically, the response message may include information that the state of the second EMS of the second cluster 120 has been changed from the standby state to the active state. The first HA pod 410-1 may change a state of the first EMS of the first cluster 110, based on the response message. Specifically, the first HA pod 410-1 may change the state of the first EMS of the first cluster 110 from the active state to the standby state (step S412). According to an embodiment of the disclosure, the transmission of the response message (step S411) may be omitted.

According to an embodiment of the disclosure, the first HA pod 410-2 included in the first cluster 110 of the standby state may receive, from a user 430, a message that the failure has been recovered (step S413). Specifically, the message that the failure has been recovered may mean that the first EMS of the first cluster 110 may become the active state.

According to an embodiment of the disclosure, after receiving the message that the failure has been recovered, the first HA pod 410-2 may change the state of the first EMS of the first cluster 110 (step S415). Specifically, the first HA pod 410-2 may change the state of the first EMS of the first cluster 110 from the standby state to the active state. According to an embodiment of the disclosure, step S415 may be composed of step S415-1 and step S415-2.

According to an embodiment of the disclosure, the first HA pod 410-2 may transmit a change request message to the second HA pod 420-2 (step S415-1). Specifically, the change request message may include a message instructing to change the state of the second EMS of the second cluster 120 from the active state to the standby state. After receiving the change request message, the second HA pod 420-2 may change the state of the second EMS of the second cluster 120. Specifically, the second HA pod 420-2 may change the state of the second EMS of the second cluster 120 from the active state to the standby state.

According to an embodiment of the disclosure, the first HA pod 410-2 may receive a response message responsive to the change request message from the second HA pod 420-2 (step S415-2). According to an embodiment of the disclosure, the response message may include information that the state of the second EMS of the second cluster 120 has been changed. Specifically, the response message may include information that the state of the second EMS of the second cluster 120 has been changed from the active state to the standby state. The first HA pod 410-2 may change the state of the first EMS of the first cluster 110, based on the response message. Specifically, the first HA pod 410-2 may change the state of the first EMS of the first cluster 110 from the standby state to the active state. According to an embodiment of the disclosure, the transmission of the response message (step S415-2) may be omitted.

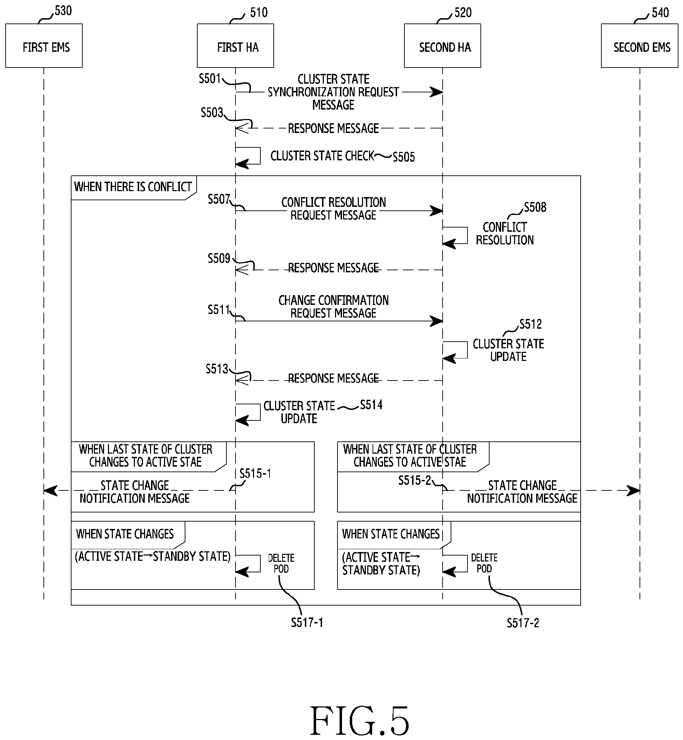

According to an embodiment of the disclosure, there may be a case where the state of the first EMS of the first cluster 110 and the state of the second EMS of the second cluster 120 are all the active state or are all the standby state. This is described in detail in the description of FIG. 5.

FIG. 5 illustrates a scenario when a first EMS of a first cluster and a second EMS of a second cluster are in the same state in a container-based cluster environment according to an embodiment of the disclosure. Referring to FIG. 5, a first HA pod 510 may include an HA pod included in a first cluster 110. A second HA pod 520 may include an HA pod included in a second cluster 120. A first EMS 530 may include an EMS operating in the first cluster 110. A second EMS 540 may include an EMS operating in the second cluster 120. According to an embodiment of the disclosure, that the first cluster 110 and the second cluster 120 are in the same state may means that the first cluster 110 and the second cluster 120 are all in an active state or are all in a standby state. A dotted line shown in FIG. 5 may correspond to a message including a result of a requested message.

According to an embodiment of the disclosure, the description of a cluster may be used in the same meaning as the description of an EMS included in the cluster. A state of the cluster may be used in the same meaning as a state of the EMS included in the cluster. For example, a state of the first cluster 110 may be used in the same meaning as a state of a first EMS 530 included in the first cluster. For example, a state of the second cluster 120 may be used in the same meaning as a state of a second EMS 540 included in the second cluster. For example, a state of a candidate cluster may be used in the same meaning as a state of a candidate EMS included in the candidate cluster.

According to an embodiment of the disclosure, the first HA pod 510 may transmit a cluster state synchronization request message to the second HA pod 520 (step S501). According to an embodiment of the disclosure, the cluster state synchronization request message may include an HA pod mode synchronization request message. The cluster state synchronization request message may include a message transmitted to check a state of the second cluster 120.

According to an embodiment of the disclosure, the first HA pod 510 may receive a response message responsive to the cluster state synchronization request message from the second HA pod 520 (step S503). According to an embodiment of the disclosure, the response message may include a response message responsive to the HA pod mode synchronization request message. According to an embodiment of the disclosure, the response message may include information related to the state of the second cluster 120. Specifically, when the second cluster 120 is in an active state, the response message may include information indicating that the second cluster 120 is in the active state. In addition, when the second cluster 120 is in a standby state, the response message may include information indicating that the second cluster 120 is in the standby state. According to an embodiment of the disclosure, the transmission of the response message (step S503) may be omitted.

According to an embodiment of the disclosure, the first HA pod 510 may check a state of the first cluster 110 (step S505). Specifically, the first HA pod 510 may check whether the first cluster 110 is in the active state or the standby state.

According to an embodiment of the disclosure, when the first cluster 110 and the second cluster 120 are all in the active state or are all in the standby state, a conflict may occur between the first cluster 110 and the second cluster 120. According to an embodiment of the disclosure, when there is the conflict, the first HA pod 510 may transmit a conflict resolution request message to the second HA pod 520 (step S507). According to an embodiment of the disclosure, the conflict resolution message may include a preparation message for transmitting a cluster state change confirmation request message. After receiving the conflict resolution message, the second HA pod 520 may change a mode of the second HA pod 520 for the sake of conflict resolution (step S508). A priority must be determined between the first HA pod 510 and the second HA pod 520 wherein the mode of the second HA pod 520 is changed. According to an embodiment of the disclosure, when the first HA pod 510 has the priority, the first cluster 110 may be set to the active state and the second cluster 120 may be set to the standby state. According to an embodiment of the disclosure, when the second HA pod 520 has the priority, the first cluster 110 may be set to the standby state and the second cluster may be set to the active state. According to an embodiment of the disclosure, for the sake of conflict resolution, when the first cluster 110 and the second cluster 120 are in the active state, when the first HA pod 510 has the priority, the second HA pod 520 may change the second cluster 120 from the active state to the standby state. According to an embodiment of the disclosure, for the sake of conflict resolution, when the first cluster 110 and the second cluster 120 are in the active state, when the second HA pod 520 has the priority, the second HA pod 520 may maintain the second cluster 120 in the active state. According to an embodiment of the disclosure, for the sake of conflict resolution, when the first cluster 110 and the second cluster 120 are in the standby state, when the first HA pod 510 has the priority, the second HA pod 520 may maintain the second cluster 120 in the standby state. According to an embodiment of the disclosure, for the sake of conflict resolution, when the first cluster 110 and the second cluster 120 are in the active state, when the second HA pod 520 has the priority, the second HA pod 520 may change the second cluster 120 from the standby state to the active state. The priority may be determined as follows.

According to an embodiment, when priority is predetermined:
Regardless of an EMS startup order, the first HA pod 510 may determine to first operate one of the first cluster 110 and the second cluster 120 in the active state according to a predetermined order. For example, when the first cluster 110 is determined to have a higher priority according to a predetermined criterion, the first HA pod 510 may determine to operate the first cluster 110 in the active state, with the first cluster 110 having a higher priority than the second cluster 120. For example, when the second cluster 120 is determined to have a higher priority according to the predetermined criterion, the first HA pod 510 may determine to operate the second cluster 120 in the active state, with the second cluster 120 having a higher priority than the first cluster 110.

According to an embodiment, when there is a first-starting EMS:
When the priority is not predetermined, the first HA pod 510 may determine the priority, based on an EMS that starts up first among the first EMS 530 operating in the first cluster 110 and the second EMS 540 operating in the second cluster 120. For example, when the first EMS 530 starts up before the second EMS 540, the first HA pod 510 may determine to operate the first cluster 110 in the active state, with the first cluster 110 having a higher priority than the second cluster 120. For example, when the second EMS 540 starts up before the first EMS 530, the first HA pod 510 may determine to operate the second cluster 120 in the active state, with the second cluster 120 having a higher priority than the first cluster 110.

In an embodiment, when EMSs start up simultaneously:
When priority is predetermined and the first EMS 530 and the second EMS 540 start up simultaneously, the priority may be determined randomly. For example, when the first cluster 110 is randomly determined to have a higher priority, the first HA pod 510 may determine to operate the first cluster 110 in the active state, with that the first cluster 110 having a higher priority than the second cluster 120. For example, when the second EMS 540 is randomly determined to have a higher priority, the first HA pod 510 may determine to operate the second cluster 120 in the active state, with the second cluster 120 having a higher priority than the first cluster 110.

According to an embodiment of the disclosure, the priority may include a priority for determining to first operate one cluster among the first cluster 110 and the second cluster 120 in the active state. According to an embodiment of the disclosure, the priority may be predetermined. According to an embodiment of the disclosure, the priority may be determined based on order in which EMSs start up first. According to an embodiment of the disclosure, the priority may be determined randomly. For example, when the EMSs start up simultaneously, the priority may be determined randomly.

According to an embodiment of the disclosure, when there is a conflict, the first HA pod 510 may receive a response message responsive to the conflict resolution message from the second HA pod 520 (step S509). According to an embodiment of the disclosure, the response message to the conflict resolution message may include information about a state of the second HA pod 520. According to an embodiment of the disclosure, the transmission of the response message (step S509) may be omitted.

According to an embodiment of the disclosure, when there is the conflict, the first HA pod 510 may transmit a change confirmation request message to the second HA pod 520 (step S511). According to an embodiment of the disclosure, information included in the change confirmation request message may include information requesting the confirmation of the execution result of the second HA pod 520 responsive to the conflict resolution request message.

According to an embodiment of the disclosure, it may be reflected on the state of the second HA pod 520 based on the conflict resolution message and the change confirmation message (step S512). According to an embodiment of the disclosure, when the first HA pod 510 has priority, the first cluster 110 may be set to the active state and the second cluster 120 may be set to the standby state. According to an embodiment of the disclosure, when the second HA pod 520 has priority, the first cluster 110 may be set to the standby state and the second cluster may be set to the active state. According to an embodiment of the disclosure, for the sake of conflict resolution, when the first cluster 110 and the second cluster 120 are in the active state, when the first HA pod 510 has the priority, the second HA pod 520 may change the second cluster 120 from the active state to the standby state. According to an embodiment of the disclosure, for the sake of conflict resolution, when the first cluster 110 and the second cluster 120 are in the active state, when the second HA pod 520 has the priority, the second HA pod 520 may maintain the second cluster 120 in the active state. According to an embodiment of the disclosure, for the sake of conflict resolution, when the first cluster 110 and the second cluster 120 are in the standby state, when the first HA pod 510 has the priority, the second HA pod 520 may maintain the second cluster 120 in the standby state. According to an embodiment of the disclosure, for the sake of conflict resolution, when the first cluster 110 and the second cluster 120 are in the active state, when the second HA pod 520 has the priority, the second HA pod 520 may change the second cluster 120 from the standby state to the active state.

The first HA pod 510 may receive a response message responsive to the change confirmation request message from the second HA pod 520 (step S513). Specifically, the response message may include any one of information that the state of the second cluster 120 has been changed or information that the state of the second cluster 120 has been maintained. Thereafter, the first HA pod 510 may change the state of the first cluster 110 (step S514). For example, when it is determined to operate the first cluster 110 in the active state according to priority, the first HA pod 510 may determine to maintain the active state of the first cluster 110 (when the first cluster 110 and the second cluster 120 are all in the active state). For example, when it is determined to operate the first cluster 110 in the active state according to priority, the first HA pod 510 may determine to change the first cluster 110 from the standby state to the active state (when the first cluster 110 and the second cluster 120 are all in the standby state). For example, when it is determined to operate the second cluster 110 in the active state according to priority, the first HA pod 510 may determine to change the first cluster 110 from the active state to the standby state (when the first cluster 110 and the second cluster 120 are all in the active state). For example, when it is determined to operate the second cluster 120 in the active state according to priority, the first HA pod 510 may determine to maintain the standby state of the first cluster 110 (when the first cluster 110 and the second cluster 120 are all in the standby state).

When the last state of the first cluster 110 changes from the standby state to the active state, the first HA pod 510 may transmit a cluster state change notification message to the first EMS 530 (step S515-1). According to an embodiment of the disclosure, the cluster state change notification message may include information instructing to change the state of the first cluster 110 to the active state.

When the last state of the second cluster 120 changes from the standby state to the active state, the second HA pod 520 may transmit a cluster state change notification message to the second EMS 540 (step S515-2). According to an embodiment of the disclosure, the cluster state change notification message may include information instructing to change the state of the second cluster 120 or information instructing to maintain the state of the second cluster 120.

When the last state of the first cluster 110 changes from the active state to the standby state, the first HA pod 510 may delete a pod of the first cluster 110 (step S517-1). According to an embodiment of the disclosure, since the standby state includes a state in which an EMS pod is out of service, the first HA pod 510 may delete the pod of the first cluster 110 and stop an EMS application.

When the last state of the second cluster changes from the active state to the standby state, the second HA pod 520 may delete a pod of the second cluster 120 (step S517-2). According to an embodiment of the disclosure, since the standby state includes a state in which an EMS pod is out of service, the second HA pod 520 may delete the pod of the second cluster 120 and stop the EMS application.

The state check (step 301) of the first EMS 530 or the second EMS 540 is described in detail in the description of FIG. 6.

FIG. 6 illustrates a scenario of determining whether a failure has occurred in a container-based cluster environment according to an embodiment of the disclosure.

According to an embodiment of the disclosure, the description of a cluster may be used in the same meaning as the description of an EMS included in the cluster. A state of the cluster may be used in the same meaning as a state of the EMS included in the cluster. For example, a state of a first cluster 110 may be used in the same meaning as a state of a first EMS 530 included in the first cluster. For example, a state of a second cluster 120 may be used in the same meaning as a state of a second EMS 540 included in the second cluster. For example, a state of a candidate cluster may be used in the same meaning as a state of a candidate EMS included in the candidate cluster.

According to an embodiment of the disclosure, a first HA pod may check an EMS process (step 601). For example, the EMS process may include a pod type essential EMS process. According to an embodiment, when the check of the EMS process of the first cluster is required, it may proceed to step 603.

According to an embodiment of the disclosure, the first HA pod checks a launcher process, etc. (step 603). For example, the first HA pod may check whether the launcher process of the first cluster is running. For example, 1. when the launcher process of the first cluster is running, 2. the first HA pod may check whether all processes required for a specific pod in the first cluster are each running according to a specific configuration of the pod.

According to an embodiment of the disclosure, the first HA pod may check a return value (step 605). For example, when the return value is 0, it may be determined to be a return success. When the return value is 0, it may proceed to step 607. According to an embodiment of the disclosure, when the return value is not 0, it may be determined that an EMS failure has occurred.

According to an embodiment of the disclosure, when the check of the EMS process of the first cluster is not required in step 601, it may proceed to step 607.

According to an embodiment of the disclosure, the first HA pod may check a database (DB) (step 607). For example, the first HA pod may check a DB connection of the first cluster. According to an embodiment, when the DB check is required, it may proceed to step 609.

In step 609, the first HA pod may check whether a DB connection return is successful. For example, the first HA pod may check a DB connection state of the first cluster. When the first HA pod checks the DB connection state of the first cluster as a success, a return value may be 0. When the first HA pod checks the DB connection state of the first cluster as a fail, the return value may be non-zero.

According to an embodiment of the disclosure, the first HA pod may check the return value (step 611). For example, when the return value is 0, it may be determined to be a return success. When the return value is 0, it may proceed to step 613. According to an embodiment of the disclosure, when the return value is not 0, it may be determined that an EMS failure has occurred.

According to an embodiment of the disclosure, when the DB check is not required in step 607, it may proceed to step 613.

According to an embodiment of the disclosure, the first HA pod may check a server application (step 613). For example, the first HA pod may check the first cluster in relation to the server application. According to an embodiment of the disclosure, the server application includes a servlet, a JSP, and an HTTP processing engine. According to an embodiment, when the check of the server application of the first cluster is required, it may proceed to step 615.

According to an embodiment of the disclosure, the first HA pod may check whether a return of a server application process is successful (step 615). For example, the first HA pod may check whether a return of a server application process of the first cluster is successful. According to an embodiment of the disclosure, when the first HA pod determines that the server application process of the first cluster is successful, a return value may be 0. According to an embodiment of the disclosure, when the first HA pod determines that the server application process of the first cluster is unsuccessful, the return value may not be 0.

According to an embodiment of the disclosure, the first HA pod may check the return value. For example, when the return value is 0, it may be determined to be a return success. When the return value is 0, it may be determined that an EMS is normal (step 617).

According to an embodiment of the disclosure, when the check of the server application process of the first cluster is not required, it may be determined that the EMS is normal (step 613).

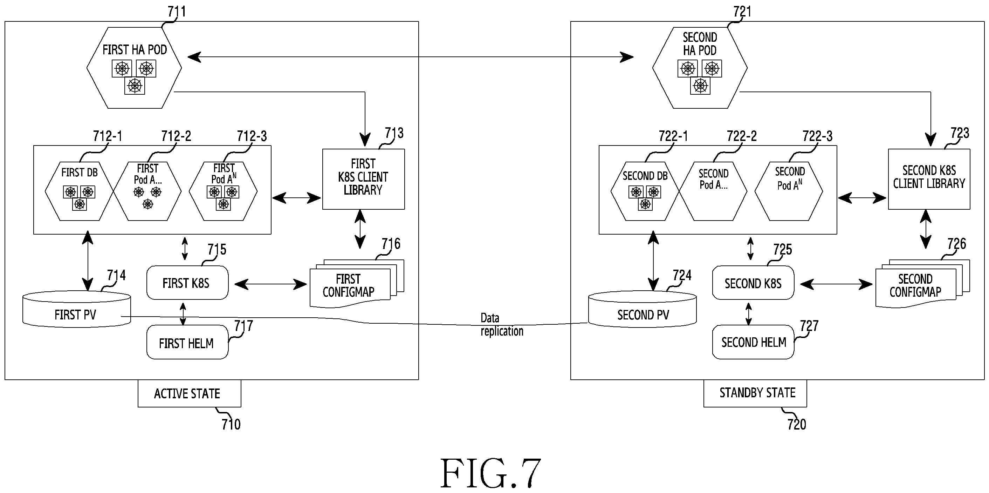

In an active state - standby state, a network communicates with a cluster of an active state. The cluster of the active state may change due to the occurrence of EMS failure, etc., and therefore, smooth data storage is required for a candidate cluster as well. A data storage scenario for the candidate cluster is described in detail in FIG. 7.

FIG. 7 illustrates a scenario of storing data in a container-based cluster environment according to an embodiment of the disclosure.

According to an embodiment of the disclosure, the description of a cluster may be used in the same meaning as the description of an EMS included in the cluster. A state of the cluster may be used in the same meaning as a state of the EMS included in the cluster. For example, a state of a first cluster 110 may be used in the same meaning as a state of a first EMS 530 included in the first cluster. For example, a state of a second cluster 120 may be used in the same meaning as a state of a second EMS 540 included in the second cluster. For example, a state of a candidate cluster may be used in the same meaning as a state of a candidate EMS included in the candidate cluster.

Referring to FIG. 7, a first HA pod 711 may include an HA pod included in a first cluster 710 of an active state. A second HA pod 721 may include an HA pod included in a second cluster 720 of the active state.

According to an embodiment of the disclosure, a method is required in which data stored in the first cluster 710 may also be used in the second cluster 720 when the first cluster 710 changes from the active state to a standby state.

The first cluster 710 may include the first HA pod 711, a first DB 712-1, one or more first pods 712-2 and 712-3, a first K8S client library 713, a first PV 714, a first K8S 715, a first ConfigMap 716, and a first Helm 717.

The second cluster 720 may include the second HA pod 721, a second DB 722-1, one or more second pods 722-2 and 722-3, a second K8S client library 723, a second PV 724, a second K8S 725, a second ConfigMap 726, and a second Helm 727.

According to an embodiment of the disclosure, the first HA pod 711 may send data stored in the PV 714 within the first cluster 710, to the PV 724 within the second cluster 720. According to an embodiment of the disclosure, the first HA pod 711 may communicate with the second HA pod 721 and send data stored in the PV 714 to the PV 724. According to an embodiment, the stored data may be sent in real time.

According to an embodiment of the disclosure, Helm may include a package in which information for building pods in K8S is made. The information for building the pods in K8S may include Internet protocol (IP) information, resource information, and Configmap information.

According to an embodiment of the disclosure, K8S may be described as a Kubernetes control plane. K8S is a place where a pod provision command is performed using the Helm package. In addition, in a process in which the pods are provided, Configmap may also be provided.

According to an embodiment of the disclosure, a DB and a pod such as a pod A to a pod A^{N} are provided in K8S through Helm installation. A place that the pod corresponding to the DB uses as a data area is a PV (storage).

According to an embodiment of the disclosure, the K8S client library is a list of APIs presented by Kubernetes itself, and presents a function capable of performing a search or change of pod Configmap, etc. that are in operation. By using the K8S client library, data in Configmap provided during installation is updated.

According to an embodiment of the disclosure, the PV (storage) is a data area used by a DB pod, and operates in a cluster of an active state and stores provided operational data. According to an embodiment of the disclosure, when a failure situation occurs in the cluster of the active state and a switchover to a cluster of a standby state is performed, the cluster of the standby state must perform an operation linked to the operational data of the cluster of the active state. Therefore, data replication is performed between the PVs (storages) of the cluster of the active state and the cluster of the standby state.

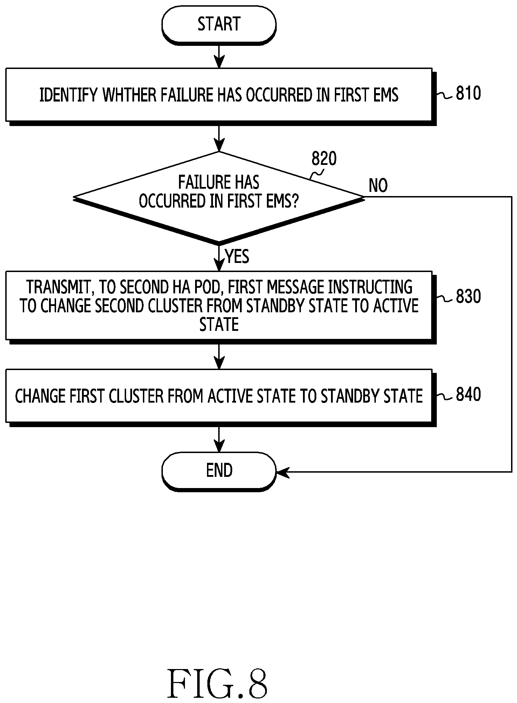

FIG. 8 illustrates a flowchart of changing a state of an EMS of a candidate cluster when a failure occurs in a container-based cluster environment according to an embodiment of the disclosure.

According to an embodiment of the disclosure, the description of a cluster may be used in the same meaning as the description of an EMS included in the cluster. A state of the cluster may be used in the same meaning as a state of the EMS included in the cluster. For example, a state of a first cluster 110 may be used in the same meaning as a state of a first EMS 530 included in the first cluster. For example, a state of a second cluster 120 may be used in the same meaning as a state of a second EMS 540 included in the second cluster. For example, a state of a candidate cluster may be used in the same meaning as a state of a candidate EMS included in the candidate cluster.

Referring to FIG. 8, in step 810, a first HA pod may identify whether a failure has occurred in a first EMS. The first HA pod may include an HA pod included in a first cluster of an active state. According to an embodiment of the disclosure, changing a state of a candidate cluster when a failure occurs may include changing the candidate cluster from a standby state to the active state. According to an embodiment of the disclosure, the candidate cluster may include a second cluster. The first HA pod may check a state of the first EMS operating in the first cluster. For example, the EMS state check may be repeated according to a regular time interval. Specifically, the first HA pod may repeat the EMS state check according to a regular time interval when an EMS state check result value corresponds to success. According to an embodiment of the disclosure, the state check of the first EMS may include a check of whether a failure has occurred in the first EMS.

In step 820, the first HA pod may identify whether a failure has occurred in the first EMS. According to an embodiment of the disclosure, the first HA pod may determine whether to transmit a first message instructing to change to the active state, based on whether the failure has occurred in the first EMS. When the occurrence of the failure of the first EMS is not identified, the first HA pod may not transmit the first message instructing to change to the active state. When the first HA pod identifies the occurrence of the failure of the first EMS, the first HA pod may proceed to step 830.

In step 830, the first HA pod may transmit, to the second HA pod, the first message instructing to change the second cluster from the standby state to the active state. The second HA pod may include an HA pod included in the second cluster of the standby state. The transmission of the change request message by the first HA pod is to maintain one cluster in the standby state when the other cluster is in the active state. According to an embodiment of the disclosure, the second cluster must change to the active state when the first cluster changes to the standby state, wherein one cluster is maintained in the standby state when the other cluster is in the active state. When the first HA pod identifies the failure of the first EMS, it is necessary to change the first cluster to the standby state. At this time, it is necessary to change the second cluster to the active state wherein one cluster is maintained in the standby state when the other cluster is in the active state.

In step 840, the first HA pod may change the first cluster from the active state to the standby state. Due to the failure of the first EMS, a network needs to communicate with the second cluster. Changing the first cluster from the active state to the standby state is to allow the network to communicate smoothly with the second cluster. Also, changing the first cluster from the active state to the standby state is to deactivate the first EMS.

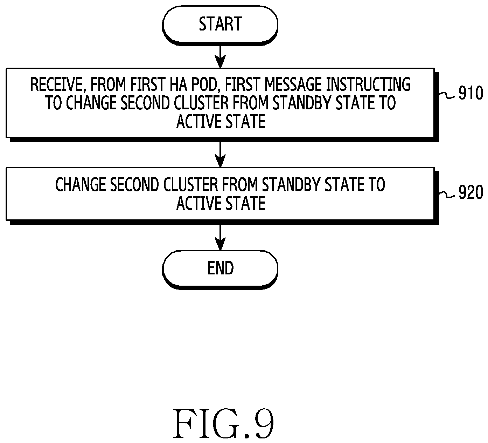

FIG. 9 illustrates a flowchart of changing a state of an EMS of a candidate cluster when a failure occurs in a container-based cluster environment according to an embodiment of the disclosure.

According to an embodiment of the disclosure, the description of a cluster may be used in the same meaning as the description of an EMS included in the cluster. A state of the cluster may be used in the same meaning as a state of the EMS included in the cluster. For example, a state of a first cluster 110 may be used in the same meaning as a state of a first EMS 530 included in the first cluster. For example, a state of a second cluster 120 may be used in the same meaning as a state of a second EMS 540 included in the second cluster. For example, a state of a candidate cluster may be used in the same meaning as a state of a candidate EMS included in the candidate cluster.

Referring to FIG. 9, in step 910, a first HA pod may identify whether a failure has occurred in a first EMS. The first HA pod may include an HA pod included in a first cluster of an active state. Also, a second HA pod may include an HA pod included in a second cluster of a standby state. According to an embodiment of the disclosure, changing a state of a candidate cluster when a failure occurs may include changing the candidate cluster from the standby state to the active state. According to an embodiment of the disclosure, the candidate cluster may include the second cluster. The second HA pod may receive, from the first HA pod, a first message instructing to change the second cluster from the standby state to the active state. The transmission of the change request message by the first HA pod is to maintain one cluster in the standby state when the other cluster is in the active state. Specifically, the second cluster must change to the active state when the first cluster changes to the standby state, wherein one cluster is maintained in the standby state when the other cluster is in the active state. When the failure of the first EMS is identified, it is necessary to change the first cluster to the standby state. At this time, it is necessary to change the second cluster to the active state, wherein one cluster is maintained in the standby state when the other cluster is in the active state.

In step 920, the second HA pod may change the second cluster from the standby state to the active state. Due to the failure of the first EMS, a network needs to communicate with the second cluster. Changing the second cluster from the standby state to the active state is to allow the network to communicate with the second cluster.

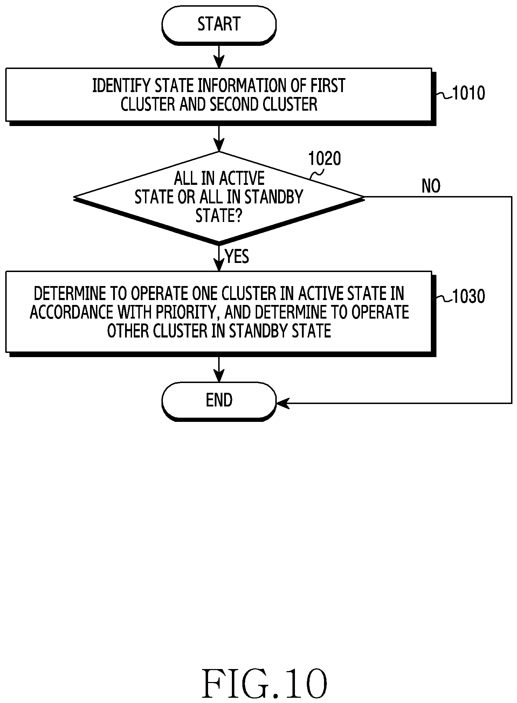

FIG. 10 illustrates a flowchart when an EMS of a first cluster and an EMS of a second cluster are in the same state in a container-based cluster environment according to an embodiment of the disclosure.

According to an embodiment of the disclosure, the description of a cluster may be used in the same meaning as the description of an EMS included in the cluster. A state of the cluster may be used in the same meaning as a state of the EMS included in the cluster. For example, a state of a first cluster 110 may be used in the same meaning as a state of a first EMS 530 included in the first cluster. For example, a state of a second cluster 120 may be used in the same meaning as a state of a second EMS 540 included in the second cluster. For example, a state of a candidate cluster may be used in the same meaning as a state of a candidate EMS included in the candidate cluster.

Referring to FIG. 10, in step 1010, a first HA pod identifies state information of a first cluster and a second cluster. The first HA pod may include an HA pod included in the first cluster. A second HA pod may include an HA pod included in the second cluster. The first EMS may include an EMS operating in the first cluster. The second EMS may include an EMS operating in the second cluster. According to an embodiment of the disclosure, that the first cluster and the second cluster are in the same state may mean that the first cluster and the second cluster are all in an active state or are all in a standby state.

In step 1020, the first HA pod identifies whether the first cluster and the second cluster are all in the active state or are all in the standby state. In an active state - active state, when both the clusters are all updated, synchronization may be delayed and services may not be guaranteed or may not operate properly. In addition, in the active state - active state, since network elements (NEs) are not distributed between the clusters, an operator is prone to errors. In addition, in the active state - active state, since synchronization data must be configured in both directions, a data conflict may occur during data replication. The first HA pod may maintain a current state when the first cluster and the second cluster are not all in the active state or are not all in the standby state. When the first HA pod identifies that the first cluster and the second cluster are all in the active or are all in the standby state, the first HA pod may proceed to step 1030.

In step 1030, the first HA pod may determine to operate one cluster in the active state according to priority, and determine to operate the other cluster in the standby state. According to an embodiment of the disclosure, when the first HA pod determines to operate the first cluster in the active state according to priority, the first HA pod may determine to operate the first cluster in the active state. According to an embodiment of the disclosure, when the first HA pod determines to operate the first cluster in the active state according to priority, the first HA pod may determine to operate the second cluster in the standby state. According to an embodiment of the disclosure, when the first HA pod determines to operate the second cluster in the active state according to priority, the first HA pod may determine to operate the first cluster in the standby state. According to an embodiment of the disclosure, when the first HA pod determines to operate the second cluster in the active state according to priority, the first HA pod may determine to operate the second cluster in the active state.

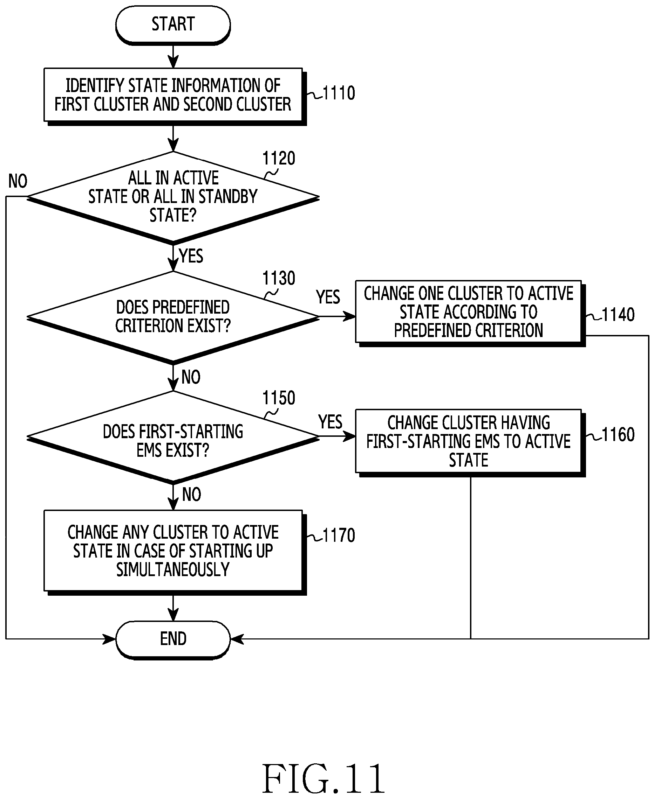

FIG. 11 illustrates a flowchart when an EMS of a first cluster and an EMS of a second cluster are in the same state in a container-based cluster environment according to an embodiment of the disclosure.

According to an embodiment of the disclosure, the description of a cluster may be used in the same meaning as the description of an EMS included in the cluster. A state of the cluster may be used in the same meaning as a state of the EMS included in the cluster. For example, a state of a first cluster 110 may be used in the same meaning as a state of a first EMS 530 included in the first cluster. For example, a state of a second cluster 120 may be used in the same meaning as a state of a second EMS 540 included in the second cluster. For example, a state of a candidate cluster may be used in the same meaning as a state of a candidate EMS included in the candidate cluster.

Referring to FIG. 11, in step 1110, a first HA pod identifies state information of a first cluster and a second cluster. The first HA pod may include an HA pod included in the first cluster. A second HA pod may include an HA pod included in the second cluster. A first EMS may include an EMS operating in the first cluster. A second EMS may include an EMS operating in the second cluster. According to an embodiment of the disclosure, that the first cluster and the second cluster are in the same state may mean that the first cluster and the second cluster are all in an active state or are all in a standby state.

In step 1120, the first HA pod identifies whether the first cluster and the second cluster are all in the active state or are all in the standby state. In an active state - active state, when both the clusters are all updated, synchronization may be delayed and services may not be guaranteed or may not operate properly. In addition, in the active state - active state, since network elements (NEs) are not distributed between the clusters, an operator is prone to errors. In addition, in the active state - active state, since synchronization data must be configured in both directions, a data conflict may occur during data replication. The first HA pod may maintain a current state when the first cluster and the second cluster are not all in the active state or are not all in the standby state. When the first HA pod identifies that the first cluster and the second cluster are all in the active state or are all in the standby state, the first HA pod may proceed to step 1130.

In step 1130, the first HA pod may identify whether a predefined criterion exists. When the predefined criterion exists, the first HA pod may proceed to step 1140.

In step 1140, the first HA pod may change one cluster to the active state according to the predefined criterion. According to an embodiment of the disclosure, regardless of an EMS startup order, the first HA pod may determine to first operate one of the first cluster and the second cluster in the active state according to a predetermined order. For example, when the first cluster is determined to have a higher priority according to a predetermined criterion, the first HA pod may determine to operate the first cluster in the active state, with the first cluster having a higher priority than the second cluster. For example, when the second cluster is determined to have a higher priority according to the predetermined criterion, the first HA pod may determine to operate the second cluster in the active state, with the second cluster having a higher priority than the first cluster.

According to an embodiment of the disclosure, when there is no predefined criterion in step 1130, the first HA pod may proceed to step 1150.

In step 1150, the first HA pod may identify whether there is a first-starting EMS. Specifically, the first HA pod may identify priority for the first EMS and the second EMS and identify whether there is the first-starting EMS. According to an embodiment of the disclosure, the first HA may determine priority, based on the first-starting EMS among the first EMS operating in the first cluster and the second EMS operating in the second cluster. According to an embodiment of the disclosure, when there is the first-starting EMS, the first HA pod may proceed to step 1160.

In step 1160, the first HA pod may change a cluster having the first-starting EMS to the active state. For example, when the first EMS starts up before the second EMS, the first HA pod may determine to operate the first cluster in the active state, with the first cluster having a higher priority than the second cluster. For example, when the second EMS starts up before the first EMS, the first HA pod may determine to operate the second cluster in the active state, with the second cluster having a higher priority than the first cluster.

According to an embodiment of the disclosure, when there is no first-starting EMS in step 1150, the first HA pod may proceed to step 1170.

In step 1170, when the first EMS and the second EMS start up simultaneously, the first HA pod may change any cluster to the active state. For example, when priority is predetermined and the first EMS and the second EMS start up simultaneously, the priority may be determined randomly. For example, when the first cluster is determined randomly to have a higher priority, the first HA pod may determine to operate the first cluster in the active state, with the first cluster having a higher priority than the second cluster. For example, when the second cluster is determined randomly to have a higher priority, the first HA pod may determine to operate the second cluster in the active state, with the second cluster having a higher priority than the first cluster.

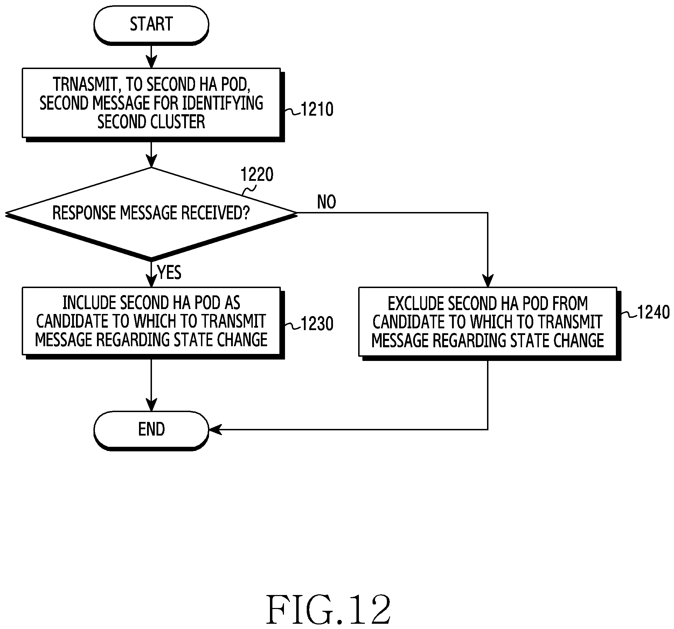

FIG. 12 illustrates a flowchart of setting a state of an EMS of a candidate cluster in a container-based cluster environment according to an embodiment of the disclosure.

According to an embodiment of the disclosure, the description of a cluster may be used in the same meaning as the description of an EMS included in the cluster. A state of the cluster may be used in the same meaning as a state of the EMS included in the cluster. For example, a state of a first cluster 110 may be used in the same meaning as a state of a first EMS 530 included in the first cluster. For example, a state of a second cluster 120 may be used in the same meaning as a state of a second EMS 540 included in the second cluster. For example, a state of a candidate cluster may be used in the same meaning as a state of a candidate EMS included in the candidate cluster.

Referring to FIG. 12, in step 1210, a first HA pod may transmit a second message for identifying a second cluster to a second HA pod. According to an embodiment of the disclosure, the first HA pod may include an HA pod included in a first cluster of an active state. Also, the second HA pod may include an HA pod included in a second cluster of a standby state. The setting of a candidate cluster may be in preparation for a failure of the first EMS operating in the first cluster that may occur in the future. According to an embodiment of the disclosure, the candidate cluster may include a cluster that may become the active state from the standby state. According to an embodiment of the disclosure, the second cluster may include a message reception object that may include the candidate cluster, and the first HA pod may transmit a message to the second HA pod and set the candidate cluster. Through the setting of the candidate cluster, the first HA pod may activate the second cluster when a failure occurs in the EMS operating in the first cluster. That is, the first HA pod may set the candidate cluster operating in the first cluster and prepare for when the failure occurs in the first EMS.

In step 1220, the first HA pod may identify whether a response message is received from the second HA pod. According to an embodiment of the disclosure, the second HA pod may transmit, to the first HA pod, the response message including information that the second cluster may include the candidate cluster. According to an embodiment of the disclosure, the response message may include information that the candidate cluster may be included. According to an embodiment of the disclosure, when the first HA pod receives the response message, the first HA pod may proceed to step 1230.

In step 1230, the first HA pod may include the second HA pod as a candidate to which to transmit a message regarding a state change. When the first HA pod receives the response message, the first HA pod may include the second cluster as a candidate cluster. When the second cluster is included as the candidate cluster, when a failure occurs in the EMS operating in the first cluster, the second HA pod included in the second cluster may include an object that receives a message instructing to change from the standby state to the active state. Through the transmitting of the response message, the second HA pod 220 may notify that it may become the candidate, and prepare for when the failure occurs in the first EMS operating in the first cluster 110.

According to an embodiment of the disclosure, when the first HA pod fails to receive the response message in step 1220, the first HA pod may proceed to step 1240.

In step 1240, the first HA pod may exclude the second HA pod from the candidate to which to transmit the message regarding the state change. For example, when the first HA pod fails to receive the response message, the first HA pod may exclude the second cluster from the candidate cluster. For example, even when a failure occurs in the first EMS, the first HA pod does not transmit a message instructing to change a state, to the second HA pod.

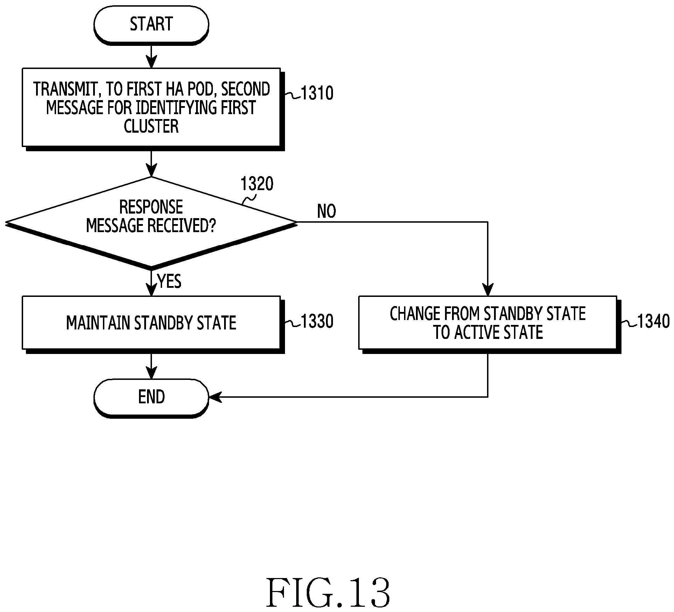

FIG. 13 illustrates a flowchart of setting a state of an EMS of a candidate cluster in a container-based cluster environment according to an embodiment of the disclosure.

According to an embodiment of the disclosure, the description of a cluster may be used in the same meaning as the description of an EMS included in the cluster. A state of the cluster may be used in the same meaning as a state of the EMS included in the cluster. For example, a state of a first cluster 110 may be used in the same meaning as a state of a first EMS 530 included in the first cluster. For example, a state of a second cluster 120 may be used in the same meaning as a state of a second EMS 540 included in the second cluster. For example, a state of a candidate cluster may be used in the same meaning as a state of a candidate EMS included in the candidate cluster.

Referring to FIG. 13, in step 1310, a second HA pod may transmit a second message for identifying a first cluster to a first HA pod. According to an embodiment of the disclosure, the first HA pod may include an HA pod included in the first cluster of an active state. Also, the second HA pod may include an HA pod included in a second cluster of a standby state. The setting of a candidate cluster may be in preparation for a failure of a first EMS operating in the first cluster that may occur in the future. According to an embodiment of the disclosure, the second HA pod may transmit a message for identifying a cluster and determine a state of the second cluster. Specifically, the second HA pod may transmit the message and determine whether to change the second cluster from the standby state to the active state.

In step 1320, the second HA pod may identify whether a response message has been received. Specifically, the second HA pod may determine the state of the first cluster, based on the response message. According to an embodiment of the disclosure, when the second HA pod receives the response message, the second HA pod may proceed to step 1330.

In step 1330, the second HA pod may maintain the second cluster in the standby state. Specifically, the second HA pod may determine the state of the first cluster, based on the response message. The second HA pod may maintain the second cluster in the standby state, based on that the state of the first cluster is identified as the active state.

According to an embodiment of the disclosure, when the second HA pod fails to receive the response message in step 1320, the second HA pod may proceed to step 1340.

In step 1340, the second HA pod may change the standby state of the second cluster to the active state. This is to maintain one cluster in the standby state when the other cluster is in the active state. According to an embodiment of the disclosure, when the second HA pod fails to receive the response message from the first HA pod, the second HA pod may determine the state of the first cluster as the standby state. According to an embodiment of the disclosure, when the second HA pod determines the state of the first cluster as the standby state, the second HA pod may change the second cluster to the active state and maintain the active state - standby state.

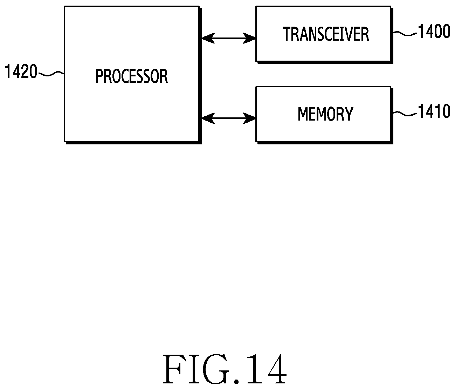

FIG. 14 illustrates an apparatus diagram of setting a candidate EMS of a candidate cluster in a container-based cluster environment according to an embodiment of the disclosure. A construction shown in FIG. 14 may be understood as a construction of an apparatus having a function of at least one of the first cluster 110, the first network 117, the second cluster 120, and the second network 127 shown in FIG. 1. The first cluster 110 and the second cluster 120 may correspond to container-based clusters.

Referring to FIG. 14, a cluster or network is configured to include a transceiver 1400, a memory 1410, and a processor 1420.

The transceiver 1400 presents an interface for performing communication with other devices. Specifically, the transceiver 1400 converts a bit string transmitted from an object of the cluster or network to another device, into a physical signal, and converts a physical signal received from another device into a bit string. That is, the transceiver 1400 may transmit and receive signals. Specifically, the transceiver 1400 may be referred to as a modem, a transmitter, a receiver, or a transceiver.

The memory 1410 stores data such as a basic program for the operation of the object of the cluster or network, an application program, and setting information. According to an embodiment of the disclosure, the memory 1410 stores data such as a basic program for the operation of the cluster or network, an application program, and setting information. The memory 1410 may be configured as a volatile memory, a nonvolatile memory, or a combination of a volatile memory and a nonvolatile memory. And, the memory 1410 presents stored data according to a request of the processor 1420.

The processor 1420 controls the overall operations of the object of the cluster or network. According to an embodiment of the disclosure, the processor 1420 transmits and receives signals through the transceiver 1400. In addition, the processor 1420 writes data to the memory 1410, and reads. For this purpose, the processor 1420 may include at least one processor. According to various embodiments of the disclosure, the processor 1420 may control to perform synchronization that uses a wireless communication network. For example, the processor 1420 may control the aforementioned overall operations of the object of the cluster or network.

A method for operation of a first high availability (HA) pod included in a first cluster of embodiments of the disclosure described above may include, while a first element management system (EMS) of the first cluster is in an active state, identifying whether a failure has occurred in the first EMS, when the failure has occurred in the first EMS, transmitting, to a second HA pod included in a second cluster, a first message instructing to change a state of a second EMS of the second cluster, which is logically distinguished from the first cluster and includes the second EMS, from a standby state to the active state, and changing a state of the first EMS from the active state to the standby state.

In an embodiment, the method may further include identifying state information of the first EMS and state information of the second EMS, when the state of the first EMS and the state of the second EMS are all the active state or are all the standby state, determining to operate a state of one EMS among the state of the first EMS and the state of the second EMS as the active state in accordance with priority, and determining to operate a state of the other EMS as the standby state.

In an embodiment, the priority may be predetermined, be determined according to the order of starting first, or be determined randomly in the case of starting simultaneously.

In an embodiment, identifying whether the failure has occurred in the first EMS may include checking whether a launcher process is running, checking whether all processes required for a specific pod are running according to a configuration for each Pod, checking whether a DB connection return is successful, and checking whether a return is successful after checking a preset process.

In an embodiment, the method may include transmitting a second message for identifying the second cluster to the second HA pod, including the second HA pod as a candidate to which to transmit the first message when a response message to the second message is received from the second HA pod, and excluding the second HA pod from the candidate to which to transmit the first message when the response message to the second message is not received from the second HA pod.

In an embodiment, the method may include, when the failure of the first EMS is recovered, transmitting, to the second HA pod, a third message instructing to change the state of the second EMS from the active state to the standby state, and changing the state of the first EMS from the standby state to the active state.

In an embodiment, the first cluster may include a set of nodes of a physical environment or virtual environment that hosts a container-based application, the first cluster may include a worker node and a master node, the worker node may include a node on which one or more containers are deployed, and the master node may include a node that manages the worker node.

A method for operation of a second high availability (HA) pod included in a second cluster of embodiments of the disclosure described above may include, while a second element management system (EMS) of the second cluster is in a standby state, receiving, from a first HA pod included in the first cluster, a first message instructing to change the second EMS from the standby state to an active state, and changing a state of the second EMS from the standby state to the active state. The first cluster may be logically distinguished from the second cluster, and the first message may be transmitted according as a failure has occurred in the first EMS of the first cluster.

In an embodiment, the method may include, while the state of the second EMS is in the standby state, transmitting a second message for identifying the first EMS to the first HA pod, when a response message to the second message is received from the first HA pod, maintaining the state of the second EMS as the standby state, and when the response message to the second message is not received from the first HA pod, changing the state of the second EMS from the standby state to the active state.

In an embodiment, the method may further include receiving, from the first HA pod, a third message instructing to change the second EMS from the active state to the standby state, and changing the second EMS from the active state to the standby state. The third message may be transmitted according as the failure of the first EMS is recovered.

In an embodiment, the second cluster may include a set of nodes of a physical environment or virtual environment that hosts a container-based application, the second cluster may include a worker node and a master node, the worker node may include a node on which one or more containers are deployed, and the master node may include a node that manages the worker node.

A first cluster including a first high availability (HA) pod of embodiments of the disclosure described above may include a transceiver, and at least one processor. The at least one processor may be configured to configure the first HA pod, while a first element management system (EMS) of the first cluster is in an active state, identify whether a failure has occurred in the first EMS, when the failure has occurred in the first EMS, transmit, to a second HA pod included in a second cluster, a first message instructing to change a second EMS of the second cluster, which is logically distinguished from the first clusterinclud, from a standby state to the active state, and change the first EMS from the active state to the standby state.

In an embodiment, the at least one processor may be configured to configure the first HA pod, identify state information of the first EMS and state information of the second EMS, when the state of the first EMS and the state of the second EMS are all the active state or are all the standby state, determine to operate a state of one EMS among the state of the first EMS and the state of the second EMS as the active state in accordance with priority, and determine to operate a state of the other EMS as the standby state.

In an embodiment, the priority may be predetermined, be determined according to the order of starting first, or be determined randomly in the case of starting simultaneously.

In an embodiment, the at least one processor may be configured to, when identifying whether the failure has occurred in the first EMS, configure the first HA pod, check whether a launcher process is running, check whether all processes required for a specific pod are running according to a configuration for each Pod, check whether a DB connection return is successful, and check whether a return is successful after checking a preset process.

In an embodiment, the at least one processor may be configured to configure the first HA pod, transmit a second message for identifying the second cluster to the second HA pod, include the second HA pod as a candidate to which to transmit the first message when a response message to the second message is received from the second HA pod, and exclude the second HA pod from the candidate to which to transmit the first message when the response message to the second message is not received from the second HA pod.

In an embodiment, the at least one processor may be configured to configure the first HA pod, when the failure of the first EMS is recovered, transmit, to the second HA pod, a third message instructing to change a state of the second EMS from the active state to the standby state, and change the state of the first EMS from the standby state to the active state.

A second cluster including a second high availability (HA) pod of embodiments of the disclosure described above may include a transceiver, and at least one processor. The at least one processor may be configured to configure the second HA pod, while an element management system (EMS) of the second cluster is in a standby state, receive, from a first HA pod included in a first cluster, a first message instructing to change the second EMS from the standby state to an active state, and change a state of the second EMS from the standby state to the active state. The first cluster may be logically distinguished from the second cluster, and the first message may be transmitted according as a failure has occurred in a first EMS of the first cluster.

In an embodiment, the at least one processor may be configured to configure the second HA pod, while the state of the second EMS is in the standby state, transmit a second message for identifying the first EMS to the first HA pod. when a response message to the second message is received from the first HA pod, maintain the state of the second EMS as the standby state, and when the response message to the second message is not received from the first HA pod, change the state of the second EMS from the standby state to the active state.

In an embodiment, the at least one processor may be configured to configure the second HA pod, receive, from the first HA pod, a third message instructing to change the state of the second EMS from the active state to the standby state, and change the state of the second EMS from the active state to the standby state. The third message may be transmitted according as the failure of the first EMS operating in the first cluster is recovered.

The electronic device of various embodiments disclosed in this document may include various types of devices. The electronic device may include, for example, a portable communication device (example: smartphone), a computer device, a portable multimedia device, a portable medical device, a camera, a wearable device, or a home appliance. The electronic device of an embodiment of this document is not limited to the above-described devices.

Various embodiments of this document and terms used herein are not intended to limit the technical features described in this document to specific embodiments, but should be understood as including various modifications, equivalents, or alternatives of a corresponding embodiment. In relation to the description of the drawings, similar reference numbers may be used for similar or related components. The singular form of a noun corresponding to an item may include a single or plurality of items, unless the relevant context clearly indicates otherwise. In this document, each of phrases such as "A or B", "at least one of A and B", "at least one of A or B", "A, B or C", "at least one of A, B and C", and "at least one of A, B, or C" may include any one of items listed together in a corresponding phrase among the phrases, or any possible combination thereof. Terms such as "first", "second", "firstly" or "secondly" may be used simply to distinguish one component from another component, and do not limit the corresponding components in other respects (example: importance or order). When some (example: first) component is mentioned to be "coupled" or "connected" to another (example: second) component, with or without the term "functionally" or "communicatively", it means that some component may be connected to another component directly (example: wiredly), wirelessly, or through a third component.

The term "module" used in this document may include a unit implemented in hardware, software, or firmware, and may be used interchangeable with a term such as a logic, a logic block, a component, or a circuit, for example. The module may include an integrated component, or a minimum unit of the component or a part thereof performing one or more functions. For example, according to an embodiment, the module may be implemented in the form of an application-specific integrated circuit (ASIC).

Various embodiments of this document may be implemented as software (example: program) that includes one or more instructions stored in a storage medium (example: internal memory or external memory) that may be read by a machine (example: electronic device). For example, a processor (example: processor) of the machine (example: electronic device) may call at least one instruction among the stored one or more instructions from the storage medium, and execute it. This enables the machine to be operated to perform at least one function according to the called at least one instruction. The one or more instructions may include a code provided by a compiler or a code executable by an interpreter. The machine-readable storage medium may be presented in the form of a non-transitory storage medium. Here, 'non-transitory' only means that the storage medium is a tangible device and does not include a signal (example: EM wave). This term does not distinguish a case where data is stored semipermanently in the storage medium and a case where data is stored temporarily.

According to an embodiment, a method of various embodiments disclosed in this document may be included and presented in a computer program product. The computer program product may be traded as merchandise between a seller and a buyer. The computer program product may be distributed in the form of a machine-readable storage medium (example: compact disc read only memory (CD-ROM)), or may be distributed (example: downloaded or uploaded) through an application store (example: Play Store^{™}), directly between two user devices (example: smartphones), or online. In the case of online distribution, at least part of the computer program product may be at least temporarily stored in the machine-readable storage medium such as a memory of a manufacturer's server, an application store's server, or a relay server, or be temporarily provided.

According to various embodiments, each of the components (e.g., a module or a program) of the described components may include a single or multiple entities. According to various embodiments, one or more of the components or operations described above may be omitted, or one or more other components or operations may be added. Alternatively or additionally, a plurality of components (example: modules or programs) may be integrated into a single component. In this case, the integrated component may perform one or more functions of each of the plurality of components, identically or similarly to those performed by the corresponding component among the plurality of components prior to the integration. According to various embodiments, operations performed by a module, program, or another component may be executed sequentially, in parallel, iteratively, or heuristically, or one or more of the operations may be executed in a different order or be omitted, or one or more other operations may be added.

## Claims

1. A method for operation of a first high availability (HA) pod included in a first cluster, the method comprising:
while a first element management system (EMS) of the first cluster is in an active state, identifying whether a failure has occurred in the first EMS;
when the failure has occurred in the first EMS, transmitting, to a second HA pod included in a second cluster, a first message instructing to change a state of a second EMS of the second cluster, which is logically distinguished from the first cluster and comprises the second EMS, from a standby state to the active state; and
changing a state of the first EMS from the active state to the standby state.

2. The method of claim 1, further comprising:
identifying state information of the first EMS and state information of the second EMS;
when the state of the first EMS and the state of the second EMS all being in the active state or all being in the standby state, determining to operate a state of one EMS among the state of the first EMS and the state of the second EMS as the active state according to a priority; and
determining to operate a state of an other EMS as the standby state.

3. The method of claim 2, wherein the priority is predetermined, is determined according to an order of starting first, or is determined randomly in the case of starting simultaneously.

4. The method of claim 1, wherein identifying whether the failure has occurred in the first EMS comprises:
checking whether a launcher process is running;
checking whether all processes required for a specific pod are running according to a configuration for each Pod;
checking whether a database, DB, connection return is successful; and
checking whether a return is successful after checking a preset process.

5. The method of claim 1, comprising:
transmitting a second message for identifying the second cluster to the second HA pod;
comprising the second HA pod as a candidate to which to transmit the first message when a response message to the second message is received from the second HA pod; and
excluding the second HA pod from the candidate to which to transmit the first message when the response message to the second message is not received from the second HA pod.

6. The method of claim 1, comprising:
when the failure of the first EMS is recovered, transmitting, to the second HA pod, a third message instructing to change the state of the second EMS from the active state to the standby state; and
changing the state of the first EMS from the standby state to the active state.

7. The method of claim 1, wherein the first cluster comprises a set of nodes of a physical environment or virtual environment hosting a container-based application,
the first cluster comprises a worker node and a master node,
the worker node comprises a node on which one or more containers are deployed, and
the master node comprises a node that manages the worker node.

8. A method for operation of a second high availability (HA) pod included in a second cluster, the method comprising:
while a second element management system (EMS) of the second cluster is in a standby state, receiving, from a first HA pod included in a first cluster, a first message instructing to change the second EMS from the standby state to an active state; and
changing the state of the second EMS from the standby state to the active state,
wherein the first cluster is logically distinguished from the second cluster, and
the first message is transmitted according as a failure has occurred in the first EMS of the first cluster.

9. The method of claim 8, comprising:
while the state of the second EMS is in the standby state, transmitting a second message for identifying the first EMS to the first HA pod;
when a response message to the second message is received from the first HA pod, maintaining the state of the second EMS as the standby state; and
when the response message to the second message is not received from the first HA pod, changing the state of the second EMS from the standby state to the active state.

10. The method of claim 8, further comprising:
receiving, from the first HA pod, a third message instructing to change the second EMS from the active state to the standby state; and
changing the second EMS from the active state to the standby state,
wherein the third message is transmitted according as the failure of the first EMS is recovered.

11. The method of claim 8, wherein the second cluster comprises a set of nodes of a physical environment or virtual environment hosting a container-based application,
the second cluster comprises a worker node and a master node,
the worker node comprises a node on which one or more containers are deployed, and
the master node comprises a node that manages the worker node.

12. A first cluster comprising a first high availability (HA) pod, comprising:
a transceiver; and
at least one processor,
wherein the at least one processor is configured to:
configure the first HA pod,
while a first element management system (EMS) of the first cluster is in an active state, identify whether a failure has occurred in the first EMS,
when the failure has occurred in the first EMS, transmit, to a second HA pod included in a second cluster, a first message instructing to change a second EMS of the second cluster, which is logically distinguished from the first cluster, from a standby state to the active state, and
change the first EMS from the active state to the standby state.

13. The first cluster of claim 12, wherein the at least one processor is configured to:
configure the first HA pod;
identify state information of the first EMS and state information of the second EMS;
when the state of the first EMS and the state of the second EMS all being the active state or are all the standby state, determine to operate a state of one EMS among the state of the first EMS and the state of the second EMS as the active state according to a priority; and
determine to operate a state of an other EMS as the standby state.

14. The first cluster of claim 13, wherein the priority is predetermined, is determined according to an order of starting first, or is determined randomly in the case of starting simultaneously.

15. A second cluster comprising a second high availability (HA) pod, comprising:
a transceiver;
and
at least one processor,
wherein the at least one processor is configured to:
configure the second HA pod;
while an element management system (EMS) of the second cluster is in a standby state, receive, from a first HA pod included in a first cluster, a first message instructing to change the second EMS from the standby state to an active state; and
change a state of the second EMS from the standby state to the active state,
wherein the first cluster is logically distinguished from the second cluster, and
the first message is transmitted according as a failure has occurred in a first EMS of the first cluster.
